(19) Europäisches Patentamt
European Patent Office
Office européen des brevets

(11) **EP 4 539 369 A1**

(12) **EUROPEAN PATENT APPLICATION**
published in accordance with Art. 153(4) EPC

(43) Date of publication:
**16.04.2025 Bulletin 2025/16**

(21) Application number: **23826206.7**

(22) Date of filing: **13.06.2023**

(51) International Patent Classification (IPC):
**H04L 1/00** (2006.01)

(52) Cooperative Patent Classification (CPC):
**H04L 1/00**

(86) International application number:
**PCT/CN2023/099839**

(87) International publication number:
**WO 2023/246557 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.06.2022 CN 202210705960
10.08.2022 CN 202210956555**

(71) Applicant: **Huawei Technologies Co., Ltd.
Shenzhen, Guangdong 518129 (CN)**

(72) Inventors:
• **ZHANG, Yanqing
Shenzhen, Guangdong 518129 (CN)**
• **LI, Xueru
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57) This application relates to a communication method and apparatus. A first device sends first configuration information to a second device and sends second configuration information to a third device, or receives second configuration information from a third device, where the first configuration information indicates a first coding coefficient set, and the second configuration information indicates the first coding coefficient set and a second coding coefficient set. The first device obtains a first data packet, and sends first information to the second device to indicate first coded data, where the first information further includes first indication information to indicate a first coding coefficient, the first coded data is generated based on the first coding coefficient and the first data packet, and the first coding coefficient belongs to the second coding coefficient set. The second device may recode the first coded data by using the first coding coefficient set, and then send recoded data to the third device. Reliability of data transmission is improved through the recoding process of the second device.

FIG. 3

## Description

### CROSS-REFERENCE TO RELATED APPLICATIONS

This application claims priority to Chinese Patent Application No. 202210705960.2, filed with the China National Intellectual Property Administration on June 21, 2022 and entitled "NETWORK CODING TRANSMISSION METHOD", and claims priority to Chinese Patent Application No. 202210956555.8, filed with the China National Intellectual Property Administration on August 10, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

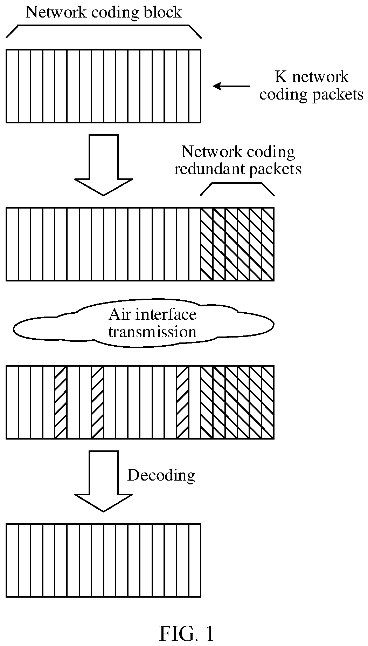

Currently, a transmission scheme based on network coding (network coding, NC) is proposed. For a general process of network coding, refer to FIG. 1. At a transmitting end, a data block, or referred to as a network coding block, may be divided into K network coding packets (or referred to as network coding data packets, network coding system packets, or the like), where each network coding packet includes data of several bits, and the K network coding packets are of a same size. By performing network coding on the network coding packets, the transmitting end may further obtain M network coding redundant packets in addition to the K network coding packets. A size of each network coding redundant packet is the same as the size of the network coding packet. In other words, a number of bits included in each network coding redundant packet is the same as a number of bits included in the network coding packet.

After a transmission process, for example, air interface transmission, the K network coding packets and the M network coding redundant packets are not all correctly received by a receiving end due to a change of channel quality or the like. As shown in FIG. 1, a black rectangle represents a packet that fails to be received by the receiving end. However, because the receiving end receives a specific quantity of network coding redundant packets, the receiving end may restore, based on the quantity of network coding redundant packets, the packet that fails to be received, thereby reducing a packet loss rate, reducing data retransmission processes, and reducing a transmission delay.

An application scenario of network coding transmission is a relay scenario. For example, a base station sends downlink data, and a relay (relay) user equipment (user equipment, UE) forwards the downlink data from the base station to a remote (remote) UE. In this scenario, two transmission paths are involved. Therefore, the base station needs to send sufficient network coding redundant packets to ensure reliability of the two transmission paths. When a transmission delay is fixed, if the base station needs to send a large quantity of network coding redundant packets, a transmission rate needs to be increased. However, the relay UE and/or the remote UE may be located at a cell edge, or may have poor signal quality, and cannot support high-speed transmission. In this case, transmission reliability may deteriorate because sufficient network coding redundant packets cannot be sent.

### SUMMARY

Embodiments of this application provide a communication method and apparatus, to improve transmission reliability.

According to a first aspect, a first communication method is provided. The method may be performed by a first device, may be performed by another device having a function of the first device, or may be performed by a chip system (or a chip) or another functional module, where the chip system or the functional module can implement the function of the first device, and the chip system or the functional module is, for example, disposed in the first device. The first device is, for example, a terminal device or a network device. The method includes: sending first configuration information to a second device and sending second configuration information to a third device, or receiving second configuration information from a third device, where the first configuration information indicates a first coding coefficient set, and the second configuration information indicates the first coding coefficient set and a second coding coefficient set; obtaining a first data packet, where the first data packet belongs to a first data block; and sending first information to the second device, where the first information indicates first coded data, the first information further includes first indication information, the first indication information indicates a first coding coefficient, the first coded data is generated based on the first coding coefficient and the first data packet, the first coding coefficient belongs to the second coding coefficient set, and the second coding coefficient set is for coding the first coded data.

In this embodiment of this application, the first device may send the first configuration information to the second device, and the first configuration information may indicate the first coding coefficient set. For example, the second device may recode received coded data based on the first coding coefficient set, and the second device is, for example, a relay device. For example, the second device receives the coded data from the first device, where the data is obtained through a coding process, and the coded data is to be sent to the third device. In this case, the second device may recode the coded data by using the first coding coefficient set, and then send recoded data to the third device. Reliability of data transmission is improved through the recoding process of the second device. Because the reliability of data transmission is improved, the first device may not need to send excessive coded data, or in other words, may not need to send excessive redundant packets, thereby reducing transmission overheads.

In an optional implementation, the method further includes: obtaining a second data packet, where the second data packet belongs to the first data block; and sending second information to the third device, where the second information indicates second coded data, the second coded data is generated based on a second coding coefficient and the second data packet, and the second coding coefficient belongs to the second coding coefficient set. In this embodiment of this application, transmission between the first device and the third device may be implemented through a plurality of paths. For example, the first coded data may be transmitted through an indirect connection path, and the second coded data may be transmitted through a direct connection path, thereby improving a throughput rate.

In an optional implementation, the first coding coefficient set is a first coding coefficient matrix; or the second coding coefficient set is a second coding coefficient matrix, the first coding coefficient is a vector in the second coding coefficient matrix, and the second coding coefficient is another vector in the second coding coefficient matrix. The coding coefficient set may be implemented in a form of a matrix, or may be implemented in another form. A coding coefficient set may include one or more coding coefficients, and a coding coefficient is, for example, a vector, such as a row vector or a column vector.

In an optional implementation, the first information includes a packet header of the first coded data, and the packet header of the first coded data includes the first indication information. The first indication information may be included in the packet header of the first coded data, and does not need to occupy load space.

In an optional implementation, the packet header of the first coded data further indicates one or more of the following: a length of the first coded data, a quantity of data packets included in the first data block, a sequence number of the first data packet in the data packets included in the first data block, or padding bit information. The packet header of the first coded data may further indicate a plurality of types of content, so that a receiving end can decode the first coded data.

In an optional implementation, the first coding coefficient set and the second coding coefficient set are from a same finite field. The finite field may be understood as an operation rule in a coding process, for example, a rule of addition, subtraction, multiplication, and division in the coding process. If finite fields are different, corresponding operation rules are also different. Therefore, the first coding coefficient set and the second coding coefficient set are from the same finite field, so that a recoding process provided in this embodiment of this application can take effect.

According to a second aspect, a second communication method is provided. The method may be performed by a second device, may be performed by another device having a function of the second device, or may be performed by a chip system (or a chip) or another functional module, where the chip system or the functional module can implement the function of the second device, and the chip system or the functional module is, for example, disposed in the second device. The second device is, for example, a terminal device or a network device. For example, the second device may be used as a relay device. The method includes: receiving first information from a first device, where the first information indicates first coded data, the first information further includes first indication information, the first indication information indicates a first coding coefficient, and the first coding coefficient is for generating the first coded data; and sending third information to a third device, where the third information indicates third coded data, the third coded data is generated based on a third coding coefficient and the first coded data, and the third information further indicates the first coding coefficient and the third coding coefficient.

In an optional implementation, the first coding coefficient belongs to a second coding coefficient set; and the third coding coefficient belongs to a first coding coefficient set.

In an optional implementation, that the third information indicates the first coding coefficient and the third coding coefficient includes: the third information includes the first indication information, and the first indication information further indicates the third coding coefficient; or the third information includes the first indication information and second indication information, and the second indication information indicates the third coding coefficient. The first indication information may indicate both the first coding coefficient and the third coding coefficient, so that excessive indication information does not need to be added in the third information, thereby reducing transmission overheads. Alternatively, the third information may indicate the first coding coefficient and the third coding coefficient via different indication information respectively, so that an indication granularity is finer.

In an optional implementation, the method further includes: receiving first configuration information, where the first configuration information indicates the first coding coefficient set.

In an optional implementation, a size of the third coded data is the same as a size of the first coded data.

In an optional implementation, the third information includes a packet header of the third coded data, and the packet header of the third coded data includes a packet header of the first coded data. For example, the second device may obtain the packet header of the third coded data by modifying the packet header of the first coded data packet. For example, the second device may add a corresponding field to the packet header of the first coded data, to obtain the packet header of the third coded data. In this manner, an original field in the packet header of the first coded data does not need to be modified, and this is easy to implement.

In an optional implementation, the packet header of the third coded data includes the second indication information, and the second indication information indicates the third coding coefficient. The packet header of the third coded data may include the second indication information, and the second indication information may indicate the third coding coefficient, so that the third device can determine the third coding coefficient corresponding to the third coded data based on the second indication information.

In an optional implementation, the first information includes a packet header of the first coded data, and the packet header of the first coded data includes the first indication information.

In an optional implementation, the packet header of the first coded data further indicates one or more of the following: a length of the first coded data, a quantity of data packets included in a first data block, a sequence number of a first data packet in the data packets included in the first data block, or padding bit information, where the first data packet is for generating the first coded data, and the first data packet belongs to the first data block.

In an optional implementation, the packet header of the third coded data includes third indication information, to indicate whether the third coded data is data coded based on the first coding coefficient set. For the third device, coded data from the first device may be data that is not recoded, and coded data from the second device may be recoded or not recoded. Therefore, the third device cannot determine, based on a transmission path, whether received coded data is recoded, and the third device cannot determine a decoding manner to be used. In view of this, in this embodiment of this application, the packet header of the third coded data may include the third indication information. The third indication information may indicate whether the third coded data is data coded based on the first coding coefficient set, or indicate whether the third coded data is recoded data, or indicate whether the third coded data is the same as the first coded data.

In an optional implementation, when the third indication information is a first value, it indicates that the third coded data is the same as the first coded data, or indicates that the third coded data is not data coded based on the first coding coefficient set, or indicates that the third coded data is not recoded data.

In an optional implementation, the first coding coefficient set and the second coding coefficient set are both from a same finite field.

For technical effects brought by the second aspect or some optional implementations, refer to descriptions of technical effects brought by the first aspect or the corresponding implementations.

According to a third aspect, a third communication method is provided. The method may be performed by a third device, may be performed by another device having a function of the third device, or may be performed by a chip system (or a chip) or another functional module, where the chip system or the functional module can implement the function of the third device, and the chip system or the functional module is, for example, disposed in the third device. The third device is, for example, a terminal device or a network device. The method includes: receiving third information from a second device, where the third information indicates third coded data, the third coded data is generated based on a third coding coefficient and first coded data, the first coded data is generated based on a first coding coefficient and a first data packet, and the third information indicates the first coding coefficient and the third coding coefficient; and decoding the third coded data based on the first coding coefficient and the third coding coefficient, to obtain the first data packet.

In an optional implementation, the first coding coefficient belongs to a second coding coefficient set; and the third coding coefficient belongs to a first coding coefficient set.

In an optional implementation, that the third information indicates the first coding coefficient and the third coding coefficient includes: the third information includes first indication information, and the first indication information indicates the first coding coefficient and the third coding coefficient; or the third information includes first indication information and second indication information, the first indication information indicates the first coding coefficient, and the second indication information indicates the third coding coefficient.

In an optional implementation, the method further includes: receiving second configuration information from a first device, where the second configuration information indicates the first coding coefficient set and the second coding coefficient set; or sending first configuration information to a second device, where the first configuration information indicates the first coding coefficient set, and sending second configuration information to a first device, where the second configuration information indicates the first coding coefficient set and the second coding coefficient set. For example, if the third device is a remote device, and the first device is a network device, the first device may send configuration information to the third device, or may send configuration information to the second device; or if the third device is a network device, and the first device is a remote device, the third device may send configuration information to the first device, or may send configuration information to the second device.

In an optional implementation, a size of the third coded data is the same as a size of the first coded data.

In an optional implementation, the third information further includes third indication information, to indicate whether the third coded data is data coded based on the first coding coefficient set.

In an optional implementation, when the third indication information is a first value, it indicates that the third coded data is the same as the first coded data.

In an optional implementation, the third information further indicates one or more of the following: a length of the first coded data, a quantity of data packets included in a first data block, a sequence number of the first data packet in the data packets included in the first data block, or padding bit information, where the first data packet belongs to the first data block.

In an optional implementation, the method further includes: receiving second information from the first device, where the second information indicates second coded data, and the second coded data is generated based on a second coding coefficient and a second data packet; and decoding the second coded data based on the first coding coefficient, to obtain the second data packet.

In an optional implementation, the first coding coefficient set and the second coding coefficient set are both from a same finite field.

For technical effects brought by the third aspect or some optional implementations, refer to descriptions of technical effects of the first aspect or the corresponding implementations, and/or refer to descriptions of technical effects of the second aspect or the corresponding implementations.

According to a fourth aspect, a communication apparatus is provided. The communication apparatus may be the first device according to any one of the first aspect to the third aspect. The communication apparatus has a function of the first device. The communication apparatus is, for example, the first device, a large device including the first device, or a functional module in the first device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to: send first configuration information to a second device and sending second configuration information to a third device, or receive second configuration information from a third device, where the first configuration information indicates a first coding coefficient set, and the second configuration information indicates the first coding coefficient set and a second coding coefficient set; the processing unit is configured to obtain a first data packet, where the first data packet belongs to a first data block; and the transceiver unit (or the sending unit) is further configured to send first information to the second device, where the first information indicates first coded data, the first information further includes first indication information, the first indication information indicates a first coding coefficient, the first coded data is generated based on the first coding coefficient and the first data packet, the first coding coefficient belongs to the second coding coefficient set, and the first coding coefficient set is for coding the first coded data.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the first device according to any one of the first aspect to the third aspect.

According to a fifth aspect, a communication apparatus is provided. The communication apparatus may be the second device according to any one of the first aspect to the third aspect. The communication apparatus has a function of the second device. The communication apparatus is, for example, the second device, a large device including the second device, or a functional module in the second device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the receiving unit) is configured to receive first information from a first device, where the first information indicates first coded data, the first information further includes first indication information, the first indication information indicates a first coding coefficient, and the first coding coefficient is for generating the first coded data; and the transceiver unit (or the sending unit) is further configured to send third information to a third device, where the third information indicates third coded data, the third coded data is generated based on a third coding coefficient and the first coded data, and the third information further indicates the first coding coefficient and the third coding coefficient.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the second device according to any one of the first aspect to the third aspect.

According to a sixth aspect, a communication apparatus is provided. The communication apparatus may be the third device according to any one of the first aspect to the third aspect. The communication apparatus has a function of the third device. The communication apparatus is, for example, the third device, a large device including the third device, or a functional module in the third device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the receiving unit) is configured to receive third information from a second device, where the third information indicates third coded data, the third coded data is generated based on a third coding coefficient and first coded data, the first coded data is generated based on a first coding coefficient and a first data packet, and the third information indicates the first coding coefficient and the third coding coefficient; and the processing unit is configured to decode the third coded data based on the first coding coefficient and the third coding coefficient, to obtain the first data packet.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the third device according to any one of the first aspect to the third aspect.

According to a seventh aspect, a communication system is provided, including a first device and a third device. The first device is configured to perform the communication method according to the first aspect, and the third device is configured to perform the communication method according to the third aspect.

Optionally, the communication system further includes a second device configured to perform the communication method according to the second aspect.

According to an eighth aspect, a computer-readable storage medium is provided. The computer-readable storage medium is configured to store a computer program or instructions. When the computer program is run or the instructions are run, the method performed by the first device, the second device, or the third device in the foregoing aspects is implemented.

According to a ninth aspect, a computer program product including instructions is provided. When the computer program product runs on a computer, the methods according to the foregoing aspects are implemented.

According to a tenth aspect, a chip system is provided, including a processor and an interface. The processor is configured to invoke instructions from the interface and run the instructions, so that the chip system implements the methods according to the foregoing aspects.

## BRIEF DESCRIPTION OF DRAWINGS

FIG. 1 is a schematic diagram of a network coding process;
FIG. 2A and FIG. 2B are schematics of two application scenarios according to an embodiment of this application;
FIG. 3 is a flowchart of a communication method according to an embodiment of this application;
FIG. 4 is a schematic of a packet header of first coded data according to an embodiment of this application;
FIG. 5 is a schematic of a packet header of third coded data according to an embodiment of this application;
FIG. 6 is a flowchart of another communication method according to an embodiment of this application;
FIG. 7A and FIG. 7B are two schematics of third indication information according to an embodiment of this application;
FIG. 8 is a schematic of fifth indication information according to an embodiment of this application;
FIG. 9 is a schematic of an apparatus according to an embodiment of this application; and
FIG. 10 is a schematic of another apparatus according to an embodiment of this application.

## DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of a noun indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first information and second information may be same information, or may be different information. In addition, the names do not indicate that content, sizes, transmitting ends/receiving ends, application scenarios, priorities, importance, or the like of the two pieces of information are different. In addition, step numbers in embodiments described in this application are merely used to distinguish between different steps, but are not used to limit a sequence of the steps. For example, S301 may be performed before S302, may be performed after S302, or may be performed at the same time with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect persons, objects, machines, and the like, and may be widely used in various scenarios. For example, the terminal device includes but is not limited to terminal devices in the following scenarios: cellular communication, device-to-device communication (device-to-device, D2D), vehicle to everything (vehicle to everything, V2X), machine-to-machine/machine type communication (machine-to-machine/machine-type communication, M2M/MTC), internet of things (internet of things, IoT), extended reality (extended reality, XR) (for example, including one or more of virtual reality (virtual reality, VR), augmented reality (augmented reality, AR), or mixed reality (mixed reality, MR)), industrial control (industrial control), self driving (self driving), remote medical (remote medical), a smart grid (smart grid), a smart furniture, a smart office, a smart wearable, smart transportation, a smart city (smart city), an unmanned aerial vehicle, a robot, and the like. The terminal device may be sometimes referred to as a UE, a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

Optionally, the first device in embodiments of this application may be a terminal device or a network device, the second device may be a terminal device or a network device, and the third device may be a terminal device or a network device. For example, the second device is a relay device, and the third device is a remote device.

The technical solutions provided in embodiments of this application are applicable to a 4th generation mobile communication technology (the 4th generation, 4G) system such as a long term evolution (long term evolution, LTE) system, or are applicable to a 5G system such as an NR system, or are applicable to a next generation mobile communication system or another similar communication system, for example, a 6th generation mobile communication technology (the 6th generation, 6G) system. This is not specifically limited. In addition, the technical solutions provided in embodiments of this application are applicable to a device-to-device (device-to-device, D2D) scenario, for example, an NR-D2D scenario, or are applicable to a vehicle-to-everything (vehicle to everything, V2X) scenario, for example, an NR-V2X scenario. For example, the technical solutions provided in embodiments of this application are applicable to the internet of vehicles, for example, vehicle-to-everything (vehicle-to-everything, V2X), or are applicable to fields such as intelligent driving, assisted driving, or an intelligent connected vehicle.

The following describes related technical features in this application.

Network coding involved in this application is not limited to the network coding itself, and may include any code having an erasure characteristic, for example, Reed-Solomon codes (reed-solomon codes, RS) and fountain codes, including Luby transform codes (luby transform codes, LT), Raptor codes, and the like. For a general process of network coding, refer to FIG. 1. At a transmitting end, a data block, or referred to as a network coding block, may be divided into K network coding packets (or referred to as network coding data packets, network coding system packets, or the like), where each network coding packet includes data of several bits, and the K network coding packets are of a same size. By performing network coding on the network coding packets, the transmitting end may further obtain M network coding redundant packets in addition to the K network coding packets. As shown in FIG. 1, a blank block represents a network coding packet, and a block marked with "\" represents a network coding redundant packet. A size of each network coding redundant packet is the same as the size of the network coding packet. In other words, a number of bits included in each network coding redundant packet is the same as a number of bits included in the network coding packet. M may be a fixed value that is predefined or preconfigured, or may be infinite, that is, there is no upper limit. If M does not have an upper limit, it may be considered that data of a network coding block is always sent, and the sending of the data of the network coding block is not stopped until acknowledgment information from a receiving end is received, and sending of data of a next network data block starts.

After a transmission process, for example, air interface transmission, the K network coding packets and the M network coding redundant packets are not all correctly received by the receiving end due to a change of channel quality or the like. As shown in FIG. 1, a shadow block marked with "/" indicates a packet that fails to be received by the receiving end. However, because the receiving end receives a specific quantity of network coding redundant packets, the receiving end may restore, based on the quantity of network coding redundant packets, the packet that fails to be received, thereby reducing a packet loss rate, reducing data retransmission processes, and reducing a transmission delay.

Currently, an XR service having a requirement on an ultra-high bandwidth and an ultra-low latency poses a more severe challenge to the current 5th generation mobile communication technology (the 5th generation, 5G) system. XR mainly includes technologies such as VR, AR, and MR for virtual and real world interaction. In a downlink transmission process, XR content of a server generates data at a fixed frequency (for example, 60 Hz or 120 Hz), and transmits the data to an XR UE via the base station. In comparison with traditional video services, XR users have stricter delay requirements because an XR service specifically requires that a motion-to-photon (motion-to-photon, MTP) delay be less than 20 milliseconds (ms). Therefore, transmitting the XR service by using the foregoing network coding transmission solution may be considered, to improve transmission reliability and reduce the delay.

For example, an XR frame may be considered as a network coding block, the XR frame may be divided into a plurality of network coding packets, and the transmitting end performs network coding on these network coding packets to generate network coding redundant packets. After air interface transmission, for example, if the receiving end receives some packets in the K network coding packets and the M network coding redundant packets, the receiving end may restore a packet that fails to be transmitted by using a decoding process of network coding, to enable complete transmission of the XR frame. Raptor Q codes are used as an example. After the receiving end receives any K packets in the K network coding packets and the M network coding redundant packets, the corresponding network coding block has a probability of about 99% of being restored; after the receiving end receives any K+1 packets in the K network coding packets and the M network coding redundant packets, the corresponding network coding block has a probability of about 99.99% of being restored; and after the receiving end receives any K+2 packets in the K network coding packets and the M network coding redundant packets, the corresponding network coding block has a probability of about 99.9999% of being restored. Therefore, the network coding packet that fails to be transmitted may be restored by using an erasure function of network coding at the cost of increasing network coding redundant packets, to ensure receiving integrity of the XR data. The K+1 packets may include a network coding packet and a network coding redundant packet, or include network coding redundant packets but do not include any network coding packet. Similarly, the K+2 packets may include a network coding packet and a network coding redundant packet, or include network coding redundant packets but do not include any network coding packet.

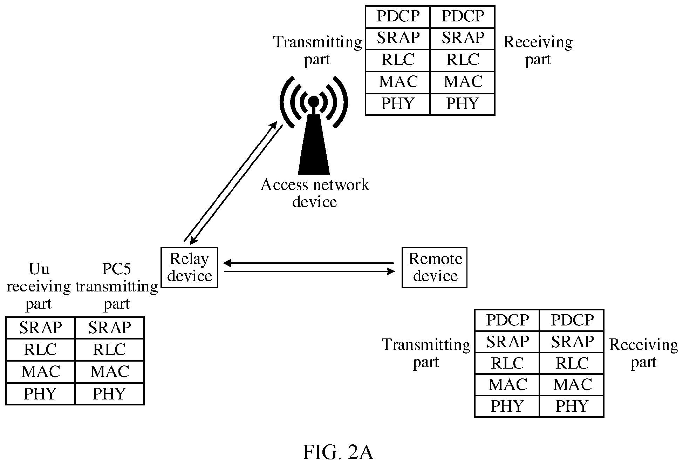

Coverage of the XR service is also an important factor for consideration due to users' mobility. A method for extending the coverage is a relay method, for example, extending the coverage in a sidelink (sidelink, SL) relay manner. In other words, an application scenario of network coding transmission is a relay scenario. FIG. 2A is a schematic of a relay scenario.

FIG. 2A shows a protocol stack of an SL relay. For example, a relay UE is a user equipment such as a mobile phone, and a remote UE is an XR device such as an AR device or VR glasses. A process in which an access network device sends data to the relay UE, and the relay UE forwards the data to the remote UE is used as an example. For example, the access network device delivers data, for example, XR data, from a higher layer (for example, a packet data convergence protocol (packet data convergence protocol, PDCP) layer) of the base station to a transmitting (transmitting) part of a sidelink relay adaptation protocol (sidelink relay adaptation protocol, SRAP) layer, adds information such as an identifier (identity, ID) and a bearer ID of a target UE at the layer, and then sends the data to the relay UE through a radio link control (radio link control, RLC) layer, a media access control (media access control) layer, a physical (PHY) layer, and the like. A receiving part of a Uu interface of an SRAP entity of the relay UE transmits the data to a transmitting part of a PC5 interface of the SRAP entity, and then sends the data to the remote UE after processing at the RLC layer, the MAC layer, and the PHY layer. A receiving part of a PC5 interface of an SRAP entity of the remote UE removes an SRAP packet header of the received data, and then delivers the data to a higher layer (for example, a PDCP layer) of the remote UE.

In a relay scenario, two transmission paths (a transmission path between the base station and the relay device, and a transmission path between the relay device and the remote device) are involved, and a transmission failure may occur on either of the two transmission paths. To ensure reliability of a transmission path, the base station needs to send a specific quantity of network coding redundant packets; and to ensure reliability of two transmission paths, the base station needs to send more network coding redundant packets. When a transmission delay is fixed, if the base station needs to send a large quantity of network coding redundant packets, a transmission rate needs to be increased. However, the relay UE and/or the remote UE may be located at a cell edge, or may have poor signal quality, and cannot support high-speed transmission. In this case, transmission reliability may deteriorate because sufficient network coding redundant packets cannot be sent.

In view of this, the technical solutions in embodiments of this application are provided. In this embodiment of this application, the first device may send the first configuration information to the second device, and the first configuration information may indicate the first coding coefficient set. For example, the second device may recode received coded data based on the first coding coefficient set, and the second device is, for example, a relay device. For example, the second device receives the coded data from the first device, where the data is obtained through a coding process, and the coded data is to be sent to the third device. In this case, the second device may recode the coded data by using the first coding coefficient set, to generate a new network coding redundant packet, and then send recoded data to the third device. Reliability of data transmission is improved through the recoding process of the second device. Because the second device can generate new network coding redundant packets, the first device may not need to send excessive coded data, or in other words, may not need to send excessive redundant packets, thereby reducing transmission overheads from the first device to the second device.

For a communication architecture applied to an embodiment of this application, refer to FIG. 2A. FIG. 2A includes a transmission path, and the transmission path is an indirect connection path. In the indirect connection path, a remote device communicates with a relay device through a PC5 interface, and then the relay device communicates with an access network device through a Uu interface. This is equivalent to that the remote device communicates with the access network device via the relay device.

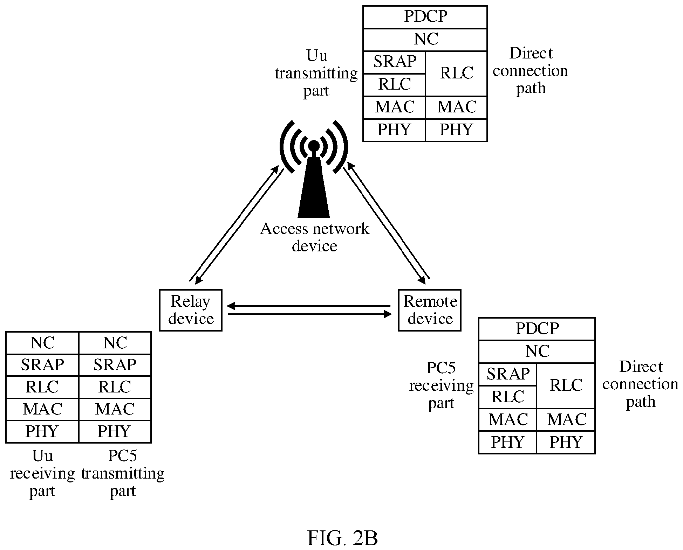

In addition, FIG. 2B is a schematic of another communication architecture to which an embodiment of this application is applied. FIG. 2B includes two transmission paths, one of which is an indirect connection path. For the indirect connection path, refer to the descriptions of FIG. 2A. The other transmission path further included in FIG. 2B is a direct connection path, and the direct connection path is a path used by the remote device to communicate with the access network device through the Uu interface, and does not need to pass through the relay device.

In embodiments of this application, a network coding function of a device may be set at a higher layer in a protocol stack, and the higher layer may be understood as a layer above a physical layer. For example, the network coding function may be set at a MAC layer, an RLC layer, an SRAP layer, or a PDCP layer; or a protocol layer dedicated to performing the network coding function, for example, referred to as a network coding layer, may be set. For example, the layer is located between the PDCP layer and the RLC layer, or located between the RLC layer and the MAC layer. For example, in FIG. 2B, an example in which a protocol layer dedicated to performing the network coding function is set is used, and the protocol layer is referred to as an NC layer in FIG. 2B. The network coding function includes, for example, one or more of the following: a process of encoding a network coding packet, a process of recoding coded data, a process of decoding recoded data, or a process of decoding network coding data (namely, coded data that is not recoded).

In embodiments of this application, a data packet that is not coded, for example, k data packets obtained by the first device described below, may be referred to as a data packet, or may be referred to as an original data sub-block. A data packet obtained through decoding (for example, a data packet obtained through a decoding process corresponding to all coding processes), for example, k data packets obtained by the third device through decoding described below, may also be referred to as a data packet, or may be referred to as decoded data or the like. Data obtained by performing one coding process (for example, a network coding process), for example, first coded data or second coded data described below, on a data packet may be referred to as coded data, or referred to as a coded sub-block. Data obtained by performing two coding processes (for example, a network coding process and a recoding process) on a data packet, or data obtained by performing one coding process (for example, a recoding process) on coded data on which another coding process (for example, a network coding process) is performed, for example, third coded data described below, may also be referred to as coded data, recoded data, a recoded sub-block, or the like.

To better describe embodiments of this application, the following describes methods provided in embodiments of this application with reference to the accompanying drawings. Unless otherwise specified below, in the accompanying drawings corresponding to embodiments of this application, steps represented by dashed lines are all optional steps.

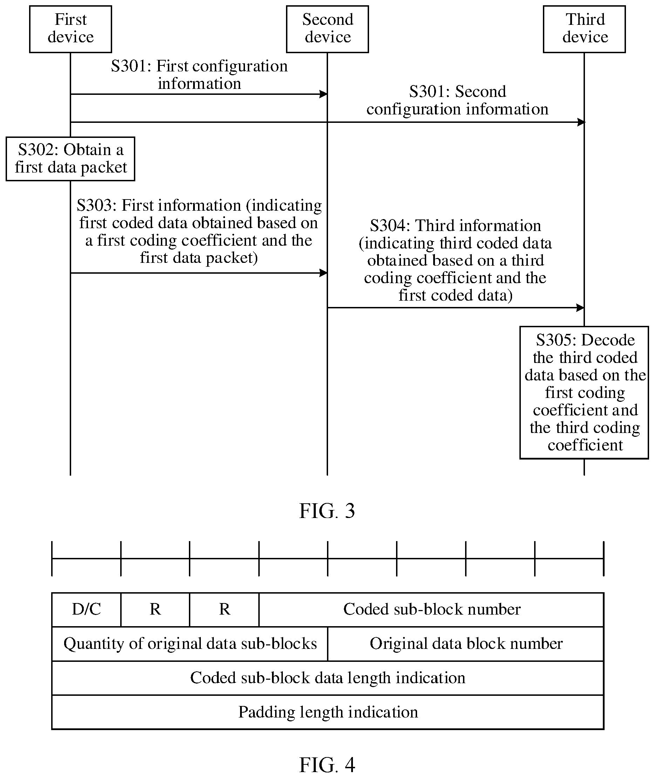

An embodiment of this application provides a communication method. FIG. 3 is a flowchart of the method. The method is applicable to the network architecture shown in FIG. 2A. For example, if the method relates to a downlink transmission process, a first device in the method is the access network device in FIG. 2A, a second device in the method is the relay device in FIG. 2A, and a third device in the method is the remote device in FIG. 2A. Alternatively, if the method relates to an uplink transmission process, a first device in the method is the remote device in FIG. 2A, a second device in the method is the relay device in FIG. 2A, and a third device in the method is the access network device in FIG. 2A.

S301: The first device sends first configuration information to the second device, and sends second configuration information to the third device; and correspondingly, the second device receives the first configuration information from the first device, and the third device receives the second configuration information from the first device. This is used as an example in FIG. 3. Alternatively, the third device sends second configuration information to the first device, and sends first configuration information to the second device; and correspondingly, the first device receives the second configuration information from the third device, and the second device receives the first configuration information from the third device. The first configuration information may indicate a first coding coefficient set, and the second configuration information may indicate the first coding coefficient set and a second coding coefficient set.

Optionally, the first coding coefficient set and the second coding coefficient set may be from a same finite field. The finite field may also be referred to as a Galois field (galois field). If a field includes only a limited quantity of elements, the field may be referred to as a finite field. The quantity of elements in the finite field may be referred to as an order of the finite field. The finite field may be understood as an operation rule in a coding process, for example, a rule of addition, subtraction, multiplication, and division in the coding process. If finite fields are different, corresponding operation rules are also different. Therefore, the first coding coefficient set and the second coding coefficient set are from the same finite field, so that a recoding process provided in this embodiment of this application can take effect. Otherwise, normal encoding and decoding cannot be performed.

The first configuration information and the second configuration information may be sent by the access network device. If the method relates to a downlink transmission process, the first device is, for example, an access network device, and the first device may send the first configuration information and the second configuration information; or if the method relates to an uplink process, the third device is, for example, an access network device, and the third device may send the first configuration information and the second configuration information.

Optionally, the access network device may configure the first coding coefficient set and the second coding coefficient set in a semi-static manner, or may preconfigure the first coding coefficient set and the second coding coefficient set. For example, the access network device may send the first configuration information to the relay device by using radio resource control (radio resource control, RRC) signaling, and send the second configuration information to the remote device by using RRC signaling. Alternatively, the access network device may dynamically configure the first coding coefficient set and the second coding coefficient set. For example, the access network device may send the first configuration information to the relay device by using downlink control information (downlink control information, DCI), and send the second configuration information to the remote device by using DCI.

Alternatively, the first coding coefficient set and the second coding coefficient set may be predefined in a protocol, and S301 may not be performed.

The second coding coefficient set is, for example, a second coding coefficient matrix, and may be configured to perform a network coding process. The first device may obtain coded data based on the second coding coefficient set and a data packet. The data packet is obtained by dividing a data block, and for example, the data block may also be referred to as a network coding block or the like. In addition, the second coding coefficient set may be further used to perform a network decoding process corresponding to the network coding process, and the network decoding process is performed by the third device. Therefore, in the downlink transmission process, the first device may configure the second coding coefficient set for the third device; and in the uplink transmission process, the second coding coefficient set may be configured by the third device.

The first coding coefficient set is, for example, a first coding coefficient matrix, and may be used to perform a recoding (recoding) process, where the recoding may also be referred to as re-encoding, secondary coding, or the like. In this embodiment of this application, after receiving coded data, the second device may not directly send the coded data to the third device, but may perform corresponding processing on the coded data. For example, in a processing manner, the second device may recode the coded data, and send recoded data to the third device. This is equivalent to that the second device does not need to decode the coded data, but directly performs a coding process on the coded data again. In this way, a data processing delay can be reduced, and transmission reliability of the coded data can be improved. The second device may recode the coded data by using the first coding coefficient set.

S302: The first device obtains a first data packet. The first data packet belongs to a first data block.

The first data block is, for example, a network coding block, or may be referred to as a first network coding block. The first device may segment the first data block to obtain k data packets, where the k data packets may also be referred to as network coding packets, original data sub-blocks, or the like, and k is a positive integer. The first data packet is, for example, any one of the k data packets. For example, when the first device performs network coding at a PDCP layer, each PDCP service data unit (service data unit, SDU) may be considered as a network coding packet, that is, a first data packet. In this case, k PDCP SDUs may form a first data block.

Alternatively, each data packet from a higher layer of the first device may be considered as a network coding packet, that is, a first data packet, and k data packets from the higher layer of the first device may be considered as a network coding block, that is, a first data block. For example, when a protocol layer configured to implement a network coding function in the first device is a lower layer of the PDCP layer, the first device may consider each NC SDU (that is, each PDCP protocol data unit (packet data unit, PDU)) as a network coding packet. In this case, k PDCP PDUs may form a first data block.

Alternatively, if a size of the first data block is small, the first device may not segment the first data block, but use the first data block as the first data packet.

Optionally, the first data block is, for example, an RLC SDU. Alternatively, an RLC SDU may be considered as a network coding packet. For example, if the first data packet is an RLC SDU, the first data block may include one or more RLC SDUs.

S303: The first device sends first information to the second device. Correspondingly, the second device receives the first information from the first device. The first information may indicate first coded data. For example, in an indication manner, the first information includes the first coded data.

For example, the first device may generate the first coded data based on a first coding coefficient and the first data packet. Therefore, optionally, in addition to indicating the first coded data, the first information may further include first indication information. The first indication information may indicate the first coding coefficient, so that a receiving end (for example, the third device) for the first coded data can determine the coding coefficient corresponding to the first coded data, to decode the first coded data. The first device generates the first coded data based on the first coding coefficient and the first data packet. For example, in a generation manner, the first device performs network coding on the first data packet based on the first coding coefficient, to obtain the first coded data. For example, the first coding coefficient belongs to the second coding coefficient set. For example, the first coding coefficient is a row vector in the second coding coefficient set. For example, an optional second coding coefficient set is as follows:

$$\begin{bmatrix} a_{1,1} & a_{1,2} & a_{1,3} \dots a_{1,k} \\ a_{2,1} & a_{2,2} & a_{2,3} \dots a_{2,k} \\ & \dots \dots \\ a_{N_1,1} & a_{N_1,2} & a_{N_1,3} \dots a_{N_1,k} \end{bmatrix} \qquad \text{(Formula 1)}$$

For example, the first coding coefficient is a row vector in the second coding coefficient set, where $N_1=k+M$ is a total quantity of generated network coding packets and network coding redundant packets.

Alternatively, the first coding coefficient is a column vector in the second coding coefficient set. For example, an optional second coding coefficient set is as follows:

$$\begin{bmatrix} a_{1,1} & a_{1,2} & a_{1,3} \dots a_{1,N_1} \\ a_{2,1} & a_{2,2} & a_{2,3} \dots a_{2,N_1} \\ & \dots \dots \\ a_{k,1} & a_{k,2} & a_{k,3} & \dots & a_{k,N_1} \end{bmatrix} \qquad \text{(Formula 2)}$$

For example, the first coding coefficient is a column vector in the second coding coefficient set, where $N_1=k+M$ is a total quantity of generated network coding packets and network coding redundant packets.

For example, the first device segments the first data block to obtain k data packets. The first device may perform network coding on the k data packets. It may be understood as that the first device performs network coding on the k data packets based on the second coding coefficient set. For example, when the first coding coefficient is a row vector in the second coding coefficient set, a network coding process is as follows:

$$\begin{bmatrix} a_{1,1} & a_{1,2} & a_{1,3} \dots a_{1,k} \\ a_{2,1} & a_{2,2} & a_{2,3} \dots a_{2,k} \\ & \dots \dots \\ a_{N_1,1} & a_{N_1,2} & a_{N_1,3} \dots a_{N_1,k,} \end{bmatrix} \begin{bmatrix} x_1 \\ x_2 \\ \dots \\ x_k \end{bmatrix} = \begin{bmatrix} y_1 \\ y_2 \\ \dots \\ y_{N_1} \end{bmatrix} \qquad \text{(Formula 3)}$$

Alternatively, for example, when the first coding coefficient is a column vector in the second coding coefficient set, a network coding process is as follows:

$$[x_1, x_2, \dots, x_k] \begin{bmatrix} a_{1,1} & a_{1,2} & a_{1,3} \dots a_{1,N_1} \\ a_{2,1} & a_{2,2} & a_{2,3} \dots a_{2,N_1} \\ & \dots \dots \\ a_{k,1} & a_{k2} & a_{k,3} \dots a_{k,N_1,} \end{bmatrix} = [y_1, y_2, \dots, y_{N_1}] \qquad \text{(Formula 4)}$$

$x_1$ to $x_k$ indicate the k data packets. The first device may obtain $N_1$ pieces of coded data by performing network coding on the k data packets, where $y_1$ to $y_{N_1}$ represent the $N_1$ pieces of coded data. For example, the first coded data is one of the $N_1$ pieces of coded data, for example, is $x_1$. Formula 1 is used as an example. $a_{1,1}, a_{1,2}, a_{1,3}, \dots, a_{1,k}$ in the second coding coefficient set, for example, is a first coding coefficient corresponding to the first coded data. The $N_1$ pieces of coded data may include k pieces of data included in the k network coding packets, and include m pieces of data included in m network coding redundant packets. For example, the first coded data is one of the $N_1$ pieces of coded data, or one of the m pieces of data. m is a positive integer, and k and m may be equal or not equal. For example, a value of m may be determined based on factors such as quality of a transmission path. The first device adds a packet header (also referred to as a network coding packet header or the like) to each piece of coded data in the $N_1$ pieces of coded data, to obtain $N_1$ pieces of coded data to which packet headers are added. For example, the first device may obtain $N_1$ pieces of information, where each piece of information may indicate one piece of coded data and may include a packet header of the coded data. Processing processes of the first device for the $N_1$ pieces of coded data are similar. Therefore, the first coded data is used as an example for description in this specification.

For example, one piece of information in the $N_1$ pieces of information is first information, and the first information may include first coded data and a packet header of the first coded data. As described above, the first information may include the first indication information. For example, the first indication information is in the packet header of the first coded data. FIG. 4 is a schematic of a packet header of first coded data. A "coded sub-block number" in FIG. 4 may indicate a number of the first data packet after network coding, or in other words, indicate a number of the first coded data. For example, a value of the "coded sub-block number" is greater than or equal to 0, and is less than or equal to $N_1$. The number of the first data packet after network coding, for example, is the same as a sequence number of the first coding coefficient in the second coding coefficient set. Therefore, the "coded sub-block number" may also be an example of the first indication information. For example, the "coded sub-block number" may include the sequence number of the first coding coefficient in the second coding coefficient set, to indicate the first coding coefficient by using the sequence number. Formula 1 is used as an example. The second coding coefficient set includes a plurality of row vectors, and the plurality of row vectors are a plurality of coding coefficients. Each row vector may correspond to one sequence number. In this case, a row vector, or in other words, a coding coefficient, may be indicated by indicating a sequence number of the row vector. Formula 2 is used as an example. The second coding coefficient set includes a plurality of column vectors, and the plurality of column vectors are a plurality of coding coefficients. Each column vector may correspond to one sequence number. In this case, a column vector, or in other words, a coding coefficient, may be indicated by indicating a sequence number of the column vector. Optionally, the sequence number of the first coding coefficient in the second coding coefficient set may be the same as a sequence number of the first data packet in data packets included in the first data block. In this case, the first indication information may further indicate the sequence number of the first data packet in the data packets included in the first data block.

Optionally, the first information may further indicate (or include) one or more of the following information: a sequence number of the first data block, a length of the first coded data, a quantity of the data packets included in the first data block, the sequence number of the first data packet in the data packets included in the first data block, or padding bit information. For example, the information is included in the packet header of the first coded data. Optionally, the sequence number of the first coding coefficient in the second coding coefficient set may be the same as a sequence number of the first data packet in data packets included in the first data block. In this case, the first indication information may further indicate the sequence number of the first data packet in the data packets included in the first data block. For example, the "coded sub-block number" in FIG. 4 may be used as the first indication information.

As shown in FIG. 4, a "coded sub-block data length indication" may be used to indicate the length of the first coded data. For example, the "coded sub-block data length indication" includes length information of the first coded data, and the length information is represented, for example, by a quantity of bits. A "quantity of original data sub-blocks" in FIG. 4 may indicate a quantity of data packets included in a data block to which the first data packet belongs, that is, indicate the quantity of the data packets included in the first data block, or in other words, indicate a quantity of data packets consituting the first data block, for example, k. An "original data block number" in FIG. 4 may indicate (or include) a sequence number of a data block to which the first data packet belongs, that is, indicate the sequence number of the first data block. For example, if there are a plurality of to-be-sent data blocks, and the first data block is one of the to-be-sent data blocks, a packet header of coded data obtained by performing network coding on a data packet obtained by segmenting the first data block may indicate the sequence number of the first data block. A "padding length indication" in FIG. 4 may indicate (or include) padding bit information. For example, a length of the first information is fixed, and the length of the first coded data may be less than or equal to the length of the first information. To make the length of the first information meet a requirement, a specific quantity of bits may be padded into the first information, and the padding bit information may indicate a quantity of to-be-padded bits. In addition, in FIG. 4, the uppermost part is separated into small segments, and one small segment represents one bit.

Optionally, the packet header of the first coded data may further include other fields. For example, in FIG. 4, "D/C" represents data (data)/control (control), and R represents a reserved (reserved) bit.

In addition, the first device may further add an SRAP packet header to the first information by using a transmitting part of a Uu interface of an SRAP entity of the first device, and then send, to the second device by using the transmitting part of the Uu interface of the SRAP entity, the first information to which the SRAP packet header is added.

S304: The second device sends third information to the third device. Correspondingly, the third device receives the third information from the second device. The third information may indicate third coded data. For example, in an indication manner, the third information includes the third coded data. The third coded data is generated based on a third coding coefficient and the first coded data.

For example, after receiving the first information, the second device may obtain the first coded data indicated by the first information. For example, the second device may receive, by using a receiving part of a Uu interface of an SRAP entity of the second device, the first information to which the SRAP packet header is added. In this case, the receiving part of the Uu interface of the SRAP entity may remove the SRAP packet header, and deliver, to the protocol layer having the network coding function, the first information with the SRAP packet header removed. For descriptions of the protocol layer, refer to the foregoing descriptions. In the following descriptions, functions performed by the protocol layer are uniformly described as being performed by the second device.

For example, the second device may generate the third coded data based on the third coding coefficient and the first coded data. Optionally, a size of the third coded data is the same as a size of the first coded data. For example, the second device may recode the first coded data based on the third coding coefficient, to obtain the third coded data. The second device does not need to decode the first coded data, but recodes the first coded data by using the third coding coefficient. This reduces decoding time of the second device, thereby reducing a data transmission delay, and improving data reliability.

The third coding coefficient may belong to the first coding coefficient set, for example, may be a row vector or a column vector in the first coding coefficient set.

For example, an optional first coding coefficient set is as follows:

$$\begin{bmatrix} b_{1,1} & b_{1,2} & b_{1,3} \dots b_{1,k} \\ b_{2,1} & b_{2,2} & b_{2,3} \dots b_{2,k} \\ & \dots \dots \\ b_{N_2,1} & b_{N_2,2} & b_{N_2,3} \dots b_{N_2,k} \end{bmatrix} \qquad (\text{Formula } 5)$$

The third coding coefficient is, for example, a row vector in the first coding coefficient set.

Alternatively, another optional first coding coefficient set may be as follows:

$$\begin{bmatrix} b_{1,1} & b_{1,2} & b_{1,3} \dots b_{1,N_2} \\ b_{2,1} & b_{2,2} & b_{2,3} \dots b_{2,N_2} \\ & \dots \dots \\ b_{k,1} & b_{k,2} & b_{k,3} \dots b_{k,N_2} \end{bmatrix} \qquad \text{(Formula 6)}$$

The third coding coefficient is, for example, a column vector in the first coding coefficient set.

For example, the first device sends $N_1$ pieces of information corresponding to the first data block to the second device, where each of the $N_1$ pieces of information may indicate one piece of coded data, and the $N_1$ pieces of information indicate a total of $N_1$ pieces of coded data. The first coded data is one of the $N_1$ pieces of coded data, and the first information is one of the $N_1$ pieces of information. The second device may recode any k pieces of coded data in the $N_1$ pieces of coded data. It may be understood as that the second device recodes the $N_1$ pieces of coded data based on the first coding coefficient set. For example, when the third coding coefficient is a row vector in the first coding coefficient set, a recoding process is as follows:

$$\begin{bmatrix} b_{1,1} & b_{1,2} & b_{1,3} \dots b_{1,k} \\ b_{2,1} & b_{2,2} & b_{2,3} \dots b_{2,k} \\ & \dots \dots \\ b_{N_2,1} & b_{N_2,2} & b_{N_2,3} \dots b_{N_2,k} \end{bmatrix} \begin{bmatrix} y'_1 \\ y'_2 \\ \dots \\ y'_k \end{bmatrix} = \begin{bmatrix} z_1 \\ z_2 \\ \dots \\ z_{N_2} \end{bmatrix} \qquad \text{(Formula 7)}$$

An order in which the second device receives the $N_1$ pieces of coded data is: first receiving $y'_1$, then receiving $y'_2$, and so on, and finally receiving $y'_k$.

For another example, when the third coding coefficient is a column vector in the first coding coefficient set, a recoding process is as follows:

$$[y'_1, y'_2, \dots y'_k] \begin{bmatrix} b_{1,1} & b_{1,2} & b_{1,3} \dots b_{1,N_2} \\ b_{2,1} & b_{2,2} & b_{2,3} \dots b_{2,N_2} \\ & \dots \dots \\ b_{k,1} & b_{k,2} & b_{k,3} \dots b_{k,N_2} \end{bmatrix} = [z_1, z_2, \dots z_{N_2}] \qquad \text{(Formula 8)}$$

In Formula 7 or Formula 8, for example, $y'_1$ is $y_1$, $y'_2$ is $y_2$, and $y'_k$ is $y_k$. After receiving k pieces of information in the $N_1$ pieces of information, the second device may remove k SRAP packet headers included in the k pieces of information, and then remove k network coding packet headers, to obtain k pieces of coded data, where $y'_1$ to $y'_k$ represent the k pieces of coded data. Optionally, a subscript of y' may represent a sequence number of a coding coefficient corresponding to coded data, or in other words, a subscript of y' may be used as the "coded sub-block number" in FIG. 4.

For example, a value of a "coded sub-block number" in a packet header of coded data $y'_1$ is 1, and a value of a "coded sub-block number" in a packet header of coded data $y'_2$ is 2. It can be learned from Formula 7 or Formula 8 that the second device may obtain $N_2$ pieces of recoded data by recoding the k pieces of coded data in the $N_1$ pieces of coded data, where $z_1$ to $z_{N_2}$ represent the $N_2$ pieces of recoded data. For example, the third coded data is one of the $N_2$ pieces of recoded data, for example, is $z_1$. Formula 7 is used as an example. $b_{1,1}, b_{1,2}, b_{1,3}, \dots, b_{1,k}$ in the first coding coefficient set, for example, is a third coding coefficient corresponding to the third coded data. Formula 8 is used as an example. $b_{1,1}, b_{2,1}, b_{3,1}, \dots, b_{k,1}$ in the first coding coefficient set, for example, is a third coding coefficient corresponding to the third coded data. $N_2$ may be equal to $N_1$, to be specific, a quantity of redundant packets generated in a recoding process is the same as a quantity of redundant packets generated in previous coding; or $N_2$ may be greater than $N_1$, to be specific, the $N_2$ pieces of recoded data may include k pieces of recoded data and $N_2$-k pieces of recoded redundant data, to improve transmission reliability. If $N_2$ is less than $N_1$, the third coded data may be one of the k pieces of recoded data, or one of the $N_2$-k pieces of recoded redundant data. For example, a value of $N_2$ may be determined based on factors such as quality of a transmission path.

The second device adds a packet header to each piece of recoded data in the $N_2$ pieces of recoded data. For example, $N_2$ is equal to $N_1$. The second device may add at least k packet headers to the $N_2$ pieces of recoded data separately, where one packet header may be added to one piece of recoded data, and the packet header is a packet header of coded data corresponding to the recoded data. For example, the third information may indicate the third coded data, and may further include a packet header of the third coded data. The third coded data is obtained based on the first coded data, or the third coded data is recoded data corresponding to the first coded data. In this case, the second device may add the packet header of the first coded data to the third coded data, so that the packet header of the third coded data may include the packet header of the first coded data. This is equivalent to that, when performing recoding, the second device removes the packet header of the coded data and then performs recoding on the coded data. After the recoding is completed, the second device may re-add the packet header of the coded data to the recoded data. For descriptions of the packet header, refer to the foregoing descriptions.

A retransmission mechanism, for example, a hybrid automatic repeat request (hybrid automatic repeat request, HARQ) retransmission mechanism, is supported in embodiments of this application. In this case, if transmission at a physical layer fails, HARQ retransmission may be performed. However, the HARQ retransmission may cause out-of-order reception of a receiving end, where the receiving end includes the second device and/or the third device. For example, when sending the $N_1$ pieces of coded data, the first device sends the coded data in an order from $y_1$ to $y_{N_1}$. However, some or all coded data of the $N_1$ pieces of coded data may involve a HARQ retransmission process in a transmission process. When the second device receives the $N_1$ pieces of coded data, a receiving order may not be from $y_1$ to $y_{N_1}$. For example, the second device may first receive $y_1'$ (for example, $y_1'$ is $y_2$), then receive $y_2'$ (for example, $y_{12}'$ is $y_3$), and then receive $y_3'$ (for example, $y_3'$ is $y_1$). However, the second device generally performs recoding in the receiving order. For example, when the third coding coefficient is a row vector in the first coding coefficient set, a process in which the second device recodes any k pieces of coded data in the $N_1$ pieces of coded data based on the first coding coefficient set may be as follows:

$$\begin{bmatrix} b_{1,1} & b_{1,2} & b_{1,3} \dots b_{1,k} \\ b_{2,1} & b_{2,2} & b_{2,3} \dots b_{2,k} \\ b_{3,1} & b_{3,2} & b_{3,3} \dots b_{3,k} \\ b_{4,1} & b_{4,2} & b_{4,3} \dots b_{4,k} \\ & \dots \dots \\ b_{N_2,1} & b_{N_2,2} & b_{N_2,3} \dots b_{N_2,k} \end{bmatrix} \begin{bmatrix} y_1' \\ y_2' \\ y_3' \\ y_4' \\ \dots \\ y_k' \end{bmatrix} = \begin{bmatrix} z_1 \\ z_2 \\ z_3 \\ z_4 \\ \dots \\ z_{N_2} \end{bmatrix} \qquad \text{(Formula 9)}$$

For another example, when the third coding coefficient is a column vector in the first coding coefficient set, a process in which the second device recodes any k pieces of coded data in the $N_1$ pieces of coded data based on the first coding coefficient set may be as follows:

$$[y_1', y_2', y_3', y_4', \dots y_k'] \begin{bmatrix} b_{1,1} & b_{1,2} & b_{1,3} \dots b_{1,N_2} \\ b_{2,1} & b_{2,2} & b_{2,3} \dots b_{2,N_2} \\ b_{3,1} & b_{3,2} & b_{3,3} \dots b_{3,N_2} \\ b_{4,1} & b_{4,2} & b_{4,3} \dots b_{4,N_2} \\ & \dots \dots \\ b_{k,1} & b_{k,2} & b_{k,3} \dots b_{k,N_2} \end{bmatrix} = [z_1, z_2, z_3, z_4, \dots z_{N_2}] \qquad \text{(Formula 10)}$$

For example, the third coded data is one of the $N_2$ pieces of recoded data, for example, is $z_1$. In Formula 7, $b_{1,1}$, $b_{1,2}$, $b_{1,3}$, ..., $b_{1,k}$ in the first coding coefficient set, for example, is a third coding coefficient corresponding to third coded data $z_1$, and the third coding coefficient in Formula 7 corresponds to the coded data $y_1'$ (for example, $y_1'$ is $y_1$). However, in Formula 9, for example, the third coding coefficient is still $b_{1,1}$, $b_{1,2}$, $b_{1,3}$, ..., $b_{1,k}$, but the third coding coefficient corresponds to the coded data $y_1'$ (in this case, $y_1'$ is $y_2$). Alternatively, in Formula 8, $b_{1,1}$, $b_{2,1}$, $b_{3,1}$, ..., $b_{k,1}$ in the first coding coefficient set, for example, is a third coding coefficient corresponding to third coded data $z_1$, and the third coding coefficient in Formula 8 corresponds to the coded data $y_1'$ (for example, $y_1'$ is $y_1$). However, in Formula 10, for example, the third coding coefficient is still $b_{1,1}$, $b_{2,1}$, $b_{3,1}$, ..., $b_{k,1}$, but the third coding coefficient corresponds to the coded data $y_1'$ (in this case, $y_1'$ is $y_2$). In other words, because of the HARQ retransmission mechanism, a correspondence between a coding coefficient and coded data that correspond to recoded data is not fixed. However, the third device does not know the coding coefficient corresponding to the recoded data. Therefore, after receiving the recoded data, the third device may not be able to correctly decode the recoded data.

To resolve this problem, in embodiments of this application, in addition to the first coding coefficient, the packet header of the third coded data included in the third information may further indicate the third coding coefficient. The packet header of the third coded data may indicate the first coding coefficient and the third coding coefficient in different manners.

1. First manner in which the packet header of the third coded data indicates the first coding coefficient and the third coding coefficient.

In addition to the packet header of the first coded data, the packet header of the third coded data may further include second indication information, and the second indication information may indicate the third coding coefficient. Therefore, the third device may determine, based on the second indication information, the third coding coefficient corresponding to the third coded data. In addition, the packet header of the first coded data further includes first indication information. The third device may determine, based on the first indication information, the first coding coefficient corresponding to the third coded data. This is equivalent to that the third device may determine coding coefficients respectively corresponding to the third coded data in two coding stages, so that the third device can correctly decode the third coded data.

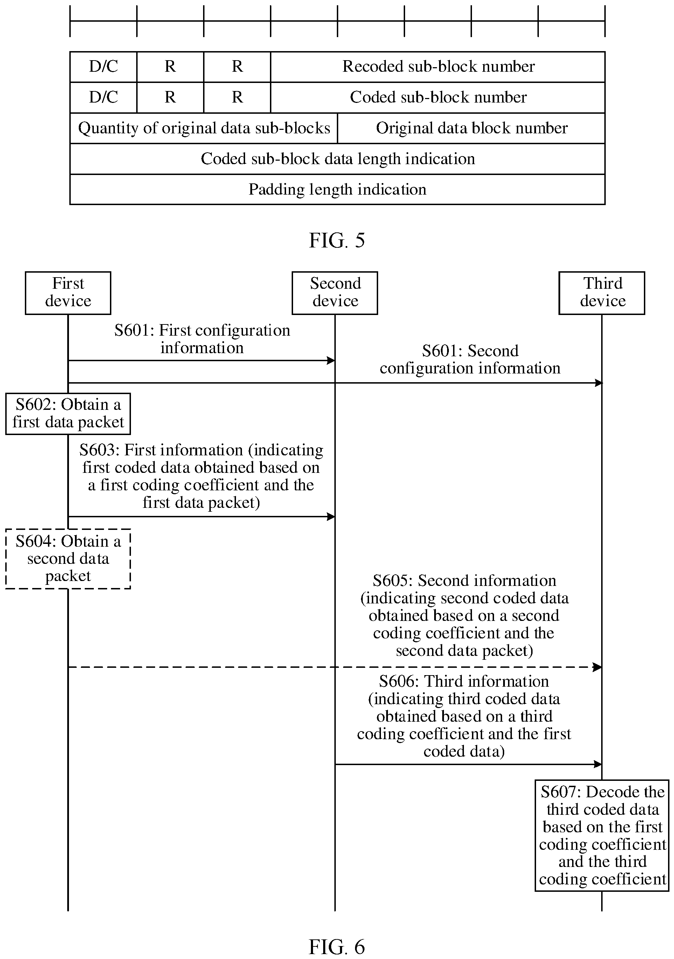

For example, the second device may add the second indication information to the packet header of the first coded data, so that the packet header of the third coded data includes the second indication information. FIG. 5 is a schematic of a packet header of third coded data. A "recoded sub-block number" in FIG. 5 may indicate a number of the first data packet after network coding and recoding, or in other words, indicate a number of the first coded data after recoding, or indicate a number of the third coded data. For example, a value of the "recoded sub-block number" is greater than or equal to 0, and is less than or equal to $N_2$. The number of the first coded data after recoding, for example, is the same as a sequence number of the third coding coefficient in the first coding coefficient set. Therefore, the "recoded sub-block number" may also be an example of an implementation of the second indication information. For example, the "recoded sub-block number" may include the sequence number of the third coding coefficient in the first coding coefficient set, to indicate the third coding coefficient by using the sequence number. For example, the first coding coefficient set includes a plurality of row vectors or column vectors, and the plurality of row vectors or column vectors are a plurality of coding coefficients. Each row vector or column vector may correspond to one sequence number. In this case, a row vector or column vector, or in other words, a coding coefficient, may be indicated by indicating a sequence number of the row vector or column vector. For example, a subscript of z in Formula 9 or Formula 10 may represent a sequence number of a coding coefficient corresponding to coded data (or recoded data), or in other words, a subscript of z may be used as the "recoded sub-block number" in FIG. 5. For example, a value of a "recoded sub-block number" in a packet header of coded data $z_1$ is 1, and a value of a "recoded sub-block number" in a packet header of coded data $z_2$ is 2. Optionally, the second device may further add another field, for example, a field represented by a character such as "D/C" or "R" shown in the first row in FIG. 5, to the packet header of the first coded data. Other fields in FIG. 5 may be understood as content included in the packet header of the first coded data. For the content, refer to the foregoing descriptions of FIG. 4.

The implementation in FIG. 5 may be considered that the second device adds a recoding packet header before the packet header of the first coded data, and the recoding packet header may indicate the third coding coefficient. In this manner, the second device does not need to modify the packet header of the first coded data, but only needs to add a recoding packet header before the packet header of the first coded data. Therefore, the implementation is simple.

2. Second manner in which the packet header of the third coded data indicates the first coding coefficient and the third coding coefficient.

The packet header of the third coded data includes the packet header of the first coded data, and the packet header of the first coded data includes first indication information. In addition to the first coding coefficient, the first indication information may further indicate the third coding coefficient. Therefore, the third device may determine the third coded data and the first coding coefficient based on the first indication information, so that the third device can correctly decode the third coded data.

If the first manner is used for indication, the second device only needs to modify the packet header of the first coded data or add a packet header before the packet header of the first coded data, and does not need to change the first coding coefficient set. However, if the second manner is used for indication, the second device may adjust the first coding coefficient set based on the first coding coefficient.

For example, the third device may adjust an arrangement order of vectors in the first coding coefficient set based on the first coding coefficient. For example, if the first coding coefficient is a row vector, the third device may adjust an arrangement order of row vectors in the first coding coefficient set based on the first coding coefficient; or if the first coding coefficient is a column vector, the third device may adjust an arrangement order of column vectors in the first coding coefficient set based on the first coding coefficient. For example, the first device sends, to the second device, $N_1$ pieces of information indicating $N_1$ pieces of coded data, where each of the $N_1$ pieces of information may indicate a corresponding first coding coefficient, the first coded data is one of the $N_1$ pieces of coded data, and the first information is one of the $N_1$ pieces of information. The third device may adjust the arrangement order of the vectors in the first coding coefficient set based on at least k pieces of information in the $N_1$ pieces of coded data, and then recode at least k pieces of coded data in the $N_1$ pieces of coded data based on an adjusted first coding coefficient set.

An example in which the third coding coefficient is a row vector in the first coding coefficient set is used. For example, a process in which the second device recodes the $N_1$ pieces of coded data based on the adjusted first coding coefficient set may be as follows:

$$
\begin{bmatrix}
b_{2,1} & b_{2,2} & b_{2,3} \dots b_{2,k} \\
b_{3,1} & b_{3,2} & b_{3,3} \dots b_{3,k} \\
b_{1,1} & b_{1,2} & b_{1,3} \dots b_{1,k} \\
b_{4,1} & b_{4,2} & b_{4,3} \dots b_{4,k} \\
& \dots \dots & \\
b_{N_2,1} & b_{N_2,2} & b_{N_2,3} \dots b_{N_2,k}
\end{bmatrix}
\begin{bmatrix}
y_1' \\ y_2' \\ y_3' \\ y_4' \\ \dots \\ y_k'
\end{bmatrix}
=
\begin{bmatrix}
z_2 \\ z_3 \\ z_1 \\ z_4 \\ \dots \\ z_{N_2}
\end{bmatrix}
\qquad \text{(Formula 11)}
$$

An example in which the third coding coefficient is a column vector in the first coding coefficient set is used. For example, a process in which the second device recodes the $N_1$ pieces of coded data based on the adjusted first coding coefficient set may be as follows:

$$
[y_1', y_2', y_3', y_4', \dots y_k']
\begin{bmatrix}
b_{1,2} & b_{1,3} & b_{1,1} \dots b_{1,N_2} \\
b_{2,2} & b_{2,3} & b_{2,1} \dots b_{2,N_2} \\
b_{3,2} & b_{3,3} & b_{3,1} \dots b_{3,N_2} \\
b_{4,2} & b_{4,3} & b_{4,1} \dots b_{4,N_2} \\
& \dots \dots & \\
b_{k,2} & b_{k,3} & b_{k,1} \dots b_{k,N_2}
\end{bmatrix}
= [z_2, z_3, z_1, z_4, \dots z_{N_2}]
\qquad \text{(Formula 12)}
$$

In Formula 11 or Formula 12, for example, $y_1'$ is $y_2$, $y_2'$ is $y_3$, $y_3'$ is $y_1$, $y_4'$ is $y_4$.

For example, if the second device receives the $N_1$ pieces of coded data in an order from the top to the bottom of a matrix y in Formula 11, the second device may adjust a row arrangement of the first coding coefficient set (for example, a matrix B in Formula 11 or Formula 12) based on the coding coefficients corresponding to the $N_1$ pieces of coded data. For example, coded data that is first received by the second device in the $N_1$ pieces of coded data is $y_1'$ (for example, $y_1'$ is $y_2$). Formula 11 is used as an example. A first coding coefficient corresponding to the coded data is $b_{2,1}, b_{2,2}, b_{2,3}, \dots, b_{2,k}$. In this case, the second device may adjust $b_{2,1}, b_{2,2}, b_{2,3}, \dots, b_{2,k}$ to the first row in the first coding coefficient set. For another example, the second piece of coded data received by the second device in the $N_1$ pieces of coded data is $y_2'$ (for example, $y_2'$ is $y_3$). Formula 11 is used as an example. A first coding coefficient corresponding to the second piece of coded data is $b_{3,1}, b_{3,2}, b_{3,3}, \dots, b_{3,k}$. In this case, the second device may adjust $b_{3,1}, b_{3,2}, b_{3,3}, \dots, b_{3,k}$ to the second row in the first coding coefficient set. The rest may be deduced by analogy. The adjusted first coding coefficient matrix is, for example, the matrix B in Formula 11. For a process in which the second device recodes the k pieces of coded data in the $N_1$ pieces of coded data based on the adjusted first coding coefficient set, refer to Formula 11. Alternatively, for example, coded data that is first received by the second device in the $N_1$ pieces of coded data is $y_1'$ (for example, $y_1'$ is $y_2$). Formula 12 is used as an example. A first coding coefficient corresponding to the coded data is $b_{1,2}, b_{2,2}, b_{3,2}, \dots, b_{k,2}$. In this case, the second device may adjust $b_{1,2}, b_{2,2}, b_{,3,2}, \dots, b_{k,2}$ to the first column in the first coding coefficient set. For another example, the second piece of coded data received by the second device in the $N_1$ pieces of coded data is $y_2'$ (for example, $y_2'$ is $y_3$). Formula 12 is used as an example. A first coding coefficient corresponding to the second piece of coded data is $b_{,1,3}, b_{2,3}, b_{3,3}, \dots, b_{k,3}$. In this case, the second device may adjust $b_{1,3}, b_{2,3}, b_{3,3}, \dots, b_{k,3}$ to the second column in the first coding coefficient set. The rest may be deduced by analogy. The adjusted first coding coefficient matrix is, for example, the matrix B in Formula 12. For a process in which the second device recodes the k pieces of coded data in the $N_1$ pieces of coded data based on the adjusted first coding coefficient set, refer to Formula 12.

The adjustment by the second device is equivalent to establishing an association relationship between a coding coefficient and a recoding coefficient of a data packet (for example, for the first data packet, the first coding coefficient is a coding coefficient of the first data packet, and the third coding coefficient is a recoding coefficient of the first data packet), so that the third device can determine the coding coefficient and the recoding coefficient of the data packet based on the coding coefficient (for example, the first coding coefficient) of the data packet. For example, an association relationship is that a sequence number of a coding coefficient of a data packet is the same as a sequence number of a recoding coefficient of the data packet, and the foregoing is described by using this example. For example, the first coding coefficient is a row vector in the second coding coefficient set. For example, for coded data $y_1$, a coding coefficient (for example, a first coding coefficient) corresponding to the coded data is $a_{1,1}, a_{1,2}, a_{1,3}, ..., a_{1,k}$. For example, a sequence number of the first coding coefficient in the second coding coefficient set is 1. For example, the first coding coefficient is a column vector in the second coding coefficient set. For example, for coded data $y_1$, a coding coefficient (for example, a first coding coefficient) corresponding to the coded data is $a_{1,1}, a_{2,1}, a_{3,1}, ..., a_{k,1}$. For example, a sequence number of the first coding coefficient in the second coding coefficient set is 1. The second device may establish an association relationship between the coding coefficient and a recoding coefficient (for example, a third coding coefficient) of the coded data $y_1$. For example, the second device further determines a coding coefficient corresponding to a sequence number 1 as the recoding coefficient of the coded data $y_1$ (in this case, a sequence number of the third coding coefficient in the first coding coefficient set is 1). Therefore, the third device can determine the first coding coefficient and the third coding coefficient of the coded data $y_1$ based on the association relationship and the first coding coefficient of the coded data $y_1$.

For example, the association relationship is pre-negotiated by the second device and the third device, or is predefined in a protocol, or is configured by an access network device. In addition, the association relationship is not limited to a case in which a sequence number of a coding coefficient of a data packet is the same as a sequence number of a recoding coefficient of the data packet. For example, the association relationship may alternatively be that a first offset exists between a sequence number of a coding coefficient of a data packet and a sequence number of a recoding coefficient of the data packet, provided that the second device adjusts the first coding coefficient set based on the association relationship, so that a relationship between the coding coefficient and the recoding coefficient of the data packet meets the association relationship.

In this manner, the second device may not need to modify the packet header of the first coded data, and may not need to add other information to the packet header of the first coded data. For example, the second device may directly use the packet header of the first coded data as the packet header of the third coded data, so that implementation is simpler.

In this embodiment of this application, the second device may further add an SRAP packet header to the third information by using a transmitting part of a PC5 interface of an SRAP entity. The SRAP packet header is, for example, an SRAP packet header of the first information. Then, the second device sends, to the third device by using the transmitting part of the PC5 interface of the SRAP entity, the third information to which the SRAP packet header is added.

S305: The third device decodes the third coded data based on the first coding coefficient and the third coding coefficient, to obtain the first data packet.

After receiving the third information, the third device may obtain the third coded data indicated by the third information. For example, the third device may receive, by using a receiving part of a PC5 interface of an SRAP entity of the third device, the third information to which the SRAP packet header is added. In this case, the receiving part of the PC5 interface of the SRAP entity may remove the SRAP packet header, and deliver, to the protocol layer having the network coding function, the third information with the SRAP packet header removed. For descriptions of the protocol layer, refer to the foregoing descriptions. In the following descriptions, functions performed by the protocol layer are uniformly described as being performed by the third device.

If the packet header of the third coded data indicates the first coding coefficient and the third coding coefficient in different manners, decoding manners of the third device may also be different.

1. First decoding manner of the third device.

For example, if the packet header of the third coded data included in the third information includes the first indication information and the second indication information, the third device may use the first decoding manner. For example, the third device may determine the first coding coefficient based on the first indication information included in the packet header of the third coded data, and may determine the third coding coefficient based on the second indication information included in the packet header of the third coded data, so as to decode the third coded data based on the first coding coefficient and the third coding coefficient. For example, the third device may adjust an arrangement order of vectors in the first coding coefficient set based on the second indication information. For example, if the third coding coefficient is a row vector, the third device may adjust an arrangement order of row vectors in the first coding coefficient set based on the second indication information; or if the third coding coefficient is a column vector, the third device may adjust an arrangement order of column vectors in the first coding coefficient set based on the second indication information. In addition, the third device may adjust an arrangement order of vectors in the second coding coefficient set based on the first indication information. For example, if the first coding coefficient is a row vector, the third device may adjust an arrangement order of row vectors in the second coding coefficient set based on the first indication information; or if the first coding coefficient is a column vector, the third device may adjust an arrangement order of column vectors in the second coding coefficient set based on the first indication information. The third device may decode the third coded data based on an adjusted first coding coefficient set and an adjusted second coding coefficient set.

For example, the second device sends $N_2$ pieces of recoded data corresponding to a first data block to the third device, and the third coded data is one piece of the recoded data. During decoding, the third device may decode any k pieces of data in the $N_2$ pieces of recoded data. Therefore, it may be understood as that the third device decodes the $N_2$ pieces of recoded data based on the first coding coefficient set and the second coding coefficient set. For example, the third device receives, from the second device, $N_2$ pieces of information indicating any k of $N_2$ pieces of recoded data, and each of any *k* pieces of information may include corresponding first indication information and second indication information. In this case, the third device may adjust an arrangement order of vectors in the second coding coefficient set based on any k of $N_2$ pieces of first indication information, adjust an arrangement order of vectors in the first coding coefficient set based on any k of $N_2$ pieces of second indication information, and then decode the any k of the $N_2$ pieces of recoded data based on an adjusted first coding coefficient set and an adjusted second coding coefficient set.

The third device generally performs decoding in a receiving order. For example, for a process in which the first device obtains the first coded data based on the second coding coefficient set, refer to Formula 3. For a process in which the second device obtains the third coded data based on the first coding coefficient set, refer to Formula 9. In this case, a process in which the third device decodes the $N_2$ pieces of recoded data based on the first coding coefficient set and the second coding coefficient set may be as follows:

$$\begin{bmatrix} x_1 \\ x_2 \\ x_3 \\ x_4 \\ \dots \\ x_k \end{bmatrix} = \begin{bmatrix} b_{3,1} & b_{3,2} & b_{3,3} & \dots & b_{3,k} \\ b_{4,1} & b_{4,2} & b_{4,3} & \dots & b_{4,k} \\ b_{2,1} & b_{2,2} & b_{2,3} & \dots & b_{2,k} \\ b_{1,1} & b_{1,2} & b_{1,3} & \dots & b_{1,k} \\ & & \dots\dots & \\ b_{k,1} & b_{k,2} & b_{k,3} & \dots & b_{k,k} \end{bmatrix} \begin{bmatrix} a_{1,1} & a_{1,2} & a_{1,3} & \dots & a_{1,k} \\ a_{4,1} & a_{4,2} & a_{4,3} & \dots & a_{4,k} \\ a_{3,1} & a_{3,2} & a_{3,3} & \dots & a_{3,k} \\ a_{2,1} & a_{2,2} & a_{2,3} & \dots & a_{2,k} \\ & & \dots\dots & \\ a_{k,1} & a_{k,2} & a_{k,3} & \dots & a_{k,k} \end{bmatrix} \begin{bmatrix} z'_1 \\ z'_2 \\ z'_3 \\ z'_4 \\ \dots \\ z'_k \end{bmatrix} \qquad \text{(Formula 13)}$$

$z'_1$ represents the first piece of recoded data received by the third device, $z'_2$ represents the second piece of recoded data received by the third device, and so on. After receiving the any k pieces of information in the $N_2$ pieces of information, the third device may remove k SRAP packet headers included in the k pieces of information, and then remove k network coding packet headers and recoding packet headers, to obtain the k pieces of recoded data, where $z'_1$ to $z'^{`}_k$ represent the k pieces of recoded data. k is a positive integer less than or equal to $N_2$. The third device may adjust the arrangement order of the vectors in the second coding coefficient set based on k pieces of first indication information in the $N_2$ pieces of first indication information, where for example, a matrix A including an element $a_{ij}$ in Formula 13 is the adjusted second coding coefficient set, and adjust the arrangement order of the vectors in the first coding coefficient set based on k pieces of second indication information, where for example, a matrix B including an element $b_{ij}$ in Formula 13 is the adjusted first coding coefficient set. The third device may decode the k pieces of recoded data based on Formula 13 to obtain k pieces of decoded data, where the k pieces of decoded data are, for example, k data packets, and are represented by $x_1$ to $x_k$.

An example in which the third device adjusts an order of row vectors in the second coding coefficient set and adjusts an order of row vectors in the first coding coefficient set is used. For example, for recoded data $z_3$, information indicating $z_3$ includes first indication information A and second indication information A. The first indication information A may indicate a first coding coefficient corresponding to $z_3$, for example, $a_{1,1}$, $a_{1,2}$, $a_{1,3}$, ... , $a_{1,k}$. The second indication information A may indicate a third coding coefficient corresponding to $z_3$, for example, $b_{3,1}$, $b_{3,2}$, $b_{3,3}$, ..., $b_{3,k}$. For example, if $z'_1$ (for example, $z'_1$ is $z_3$) is the first piece of recoded data received by the third device, the third device may adjust $a_{1,1}$, $a_{1,2}$, $a_{1,3}$, ..., $a_{1,k}$ to the first row vector in the second coding coefficient set (for example, to the first row of the second coding coefficient set), and adjust $b_{3,1}$, $b_{3,2}$, $b_{3,3}$, ..., $b_{3,k}$ to the first row vector in the first coding coefficient set (for example, to the first row of the first coding coefficient set). For another example, for recoded data $z_4$, information indicating $z_4$ includes first indication information B and second indication information B. The first indication information B may indicate a first coding coefficient corresponding to $z_4$, for example, $a_{4,1}$, $a_{4,2}$, $a_{4,3}$, ... , $a_{4,k}$. The second indication information B may indicate a third coding coefficient corresponding to $z_4$, for example, $b_{4,1}$, $b_{4,2}$, $b_{4,3}$, ... , $b_{4,k}$. For example, if $z'_2$ (for example, $z'_2$ is $z_4$) is the second piece of recoded data received by the third device, the third device may adjust $a_{4,1}$, $a_{4,2}$, $a_{4,3}$, ..., $a_{4,k}$ to the second row vector in the second coding coefficient set (for example, to the second row of the second coding coefficient set), and adjust $b_{4,1}$, $b_{4,2}$, $b_{4,3}$, ..., $b_{4,k}$ to the second row vector in the first coding coefficient set (for example, to the second row of the first coding coefficient set). By analogy, the third device can obtain the adjusted second coding coefficient set based on the k pieces of first indication information in the $N_2$ pieces of first indication information, and obtain the adjusted first coding coefficient set based on the k pieces of second indication information in the $N_2$ pieces of second indication information, so as to decode the k pieces of recoded data in the $N_2$ pieces of recoded data, to obtain the k data packets. The k pieces of first indication information correspond to the k pieces of recoded data.

2. Second decoding manner of the third device.

For example, if the packet header of the third coded data included in the third information includes the first indication information but does not include the second indication information, the third device may use the second decoding manner. For example, the third device may determine the first coding coefficient and the third coding coefficient based on the first indication information included in the packet header of the third coded data, so as to decode the third coded data based on the first coding coefficient and the third coding coefficient. For example, the third device may adjust an arrangement order of vectors in the first coding coefficient set based on the third coding coefficient. For example, if the third coding coefficient is a row vector, the third device may adjust an arrangement order of row vectors in the first coding coefficient set based on the third coding coefficient; or if the third coding coefficient is a column vector, the third device may adjust an arrangement order of column vectors in the first coding coefficient set based on the third coding coefficient. In addition, the third device may adjust an arrangement order of vectors in the second coding coefficient set based on the first coding coefficient. For example, if the first coding coefficient is a row vector, the third device may adjust an arrangement order of row vectors in the second coding coefficient set based on the first coding coefficient; or if the first coding coefficient is a column vector, the third device may adjust an arrangement order of column vectors in the second coding coefficient set based on the first coding coefficient. The third device may decode the third coded data based on an adjusted first coding coefficient set and an adjusted second coding coefficient set.

For example, if the second device sends $N_2$ pieces of recoded data corresponding to a first data block to the third device, during decoding, the third device may decode any k pieces of recoded data in the $N_2$ pieces of recoded data. Therefore, it may be understood as that the third device decodes the k pieces of recoded data in the $N_2$ pieces of recoded data based on the first coding coefficient set and the second coding coefficient set. For example, the third device receives, from the second device, $N_2$ pieces of information indicating the $N_2$ pieces of recoded data, and each of the $N_2$ pieces of information may include corresponding first indication information. In this case, the third device may adjust arrangement orders of vectors in the second coding coefficient set and vectors in the first coding coefficient set based on k pieces of first indication information in $N_2$ pieces of first indication information, and then decode any k pieces of recoded data in the $N_2$ pieces of recoded data based on an adjusted first coding coefficient set and an adjusted second coding coefficient set. The k pieces of first indication information correspond to the k pieces of recoded data.

The third device generally performs decoding in a receiving order. For example, for a process in which the first device obtains the first coded data based on the second coding coefficient set, refer to Formula 3. For a process in which the second device obtains the third coded data based on the first coding coefficient set, refer to Formula 11. In this case, a process in which the third device decodes the k pieces of recoded data in the $N_2$ pieces of recoded data based on the adjusted first coding coefficient set and the adjusted second coding coefficient set may be as follows:

$$\begin{bmatrix} x_1 \\ x_2 \\ x_3 \\ x_4 \\ ... \\ x_k \end{bmatrix} = \begin{bmatrix} b_{3,1} & b_{3,2} & b_{3,3} & ... b_{3,k} \\ b_{4,1} & b_{4,2} & b_{4,3} & ... b_{4,k} \\ b_{2,1} & b_{2,2} & b_{2,3} & ... b_{2,k} \\ b_{1,1} & b_{1,2} & b_{1,3} & ... b_{1,k} \\ & & ... ... & \\ b_{k,1} & b_{k,2} & b_{k,3} & ... b_{k,k} \end{bmatrix} \begin{bmatrix} a_{3,1} & a_{3,2} & a_{3,3} & ... a_{3,k} \\ a_{4,1} & a_{4,2} & a_{4,3} & ... a_{4,k} \\ a_{2,1} & a_{2,2} & a_{2,3} & ... a_{2,k} \\ a_{1,1} & a_{1,2} & a_{1,3} & ... a_{1,k} \\ & & ... ... & \\ a_{k,1} & a_{k,2} & a_{k,3} & ... a_{k,k} \end{bmatrix} \begin{bmatrix} z'_1 \\ z'_2 \\ z'_3 \\ z'_4 \\ ... \\ z'_k \end{bmatrix} \qquad \text{(Formula 14)}$$

After receiving any k pieces of information in the $N_2$ pieces of information, the third device may remove k SRAP packet headers included in the k pieces of information, and then remove k network coding packet headers and recoding packet headers, to obtain the k pieces of recoded data, where $z_1$ to $z_k$ represent the k pieces of recoded data. The third device may adjust the arrangement order of the vectors in the second coding coefficient set and the arrangement order of the vectors in the first coding coefficient set based on the k pieces of first indication information in the $N_2$ pieces of first indication information. For example, in Formula 14, a matrix A including an element $a_{ij}$ is the adjusted second coding coefficient set, and a matrix B including an element $b_{ij}$ is the adjusted first coding coefficient set. The third device may uniformly decode the k pieces of recoded data based on Formula 14 to obtain k pieces of decoded data, where the k pieces of decoded data are, for example, k data packets, and are represented by $x_1$ to $x_k$.

An example in which the third device adjusts an order of row vectors in the second coding coefficient set and adjusts an order of row vectors in the first coding coefficient set is used. For example, for recoded data $z_3$, information indicating $z_3$ includes first indication information A, and the first indication information A may indicate a first coding coefficient corresponding to $z_3$, for example, $a_{3,1}, a_{3,2}, a_{3,3}, ... , a_{3,k}$. The third device may learn, based on the first coding coefficient and the association relationship, that a third coding coefficient corresponding to $z_3$ is $b_{3,1}, b_{3,2}, b_{3,3}, ..., b_{3,k}$. For example, if $z_3$ is the first piece of recoded data received by the third device, the third device may adjust $a_{3,1}, a_{3,2}, a_{3,3}, ..., a_{3,k}$ to the first row vector in the second coding coefficient set (for example, to the first row of the second coding coefficient set), and adjust $b_{3,1}, b_{3,2}, b_{3,3}, ..., b_{3,k}$ to the first row vector in the first coding coefficient set (for example, to the first row of the first coding coefficient set). By analogy, the third device can obtain the adjusted second coding coefficient set and the adjusted first coding coefficient set based on the k pieces of first indication information in the $N_2$ pieces of first indication information, so as to decode the k pieces of recoded data in the $N_2$ pieces of recoded data, to obtain the k data packets.

In embodiments of this application, the second device may recode received coded data based on the first coding coefficient set, and the second device is, for example, a relay device. For example, the second device receives the coded data from the first device, where the data is obtained through a coding process, and the coded data is to be sent to the third device. In this case, the second device may recode the coded data by using the first coding coefficient set, and then send recoded data to the third device. The second device does not need to decode the first coded data, but may directly recode the first coded data, thereby reducing decoding time of the second device and reducing a transmission delay. Reliability of data transmission is also improved through the recoding process of the second device. In addition, because the reliability of data transmission is improved, the first device may not need to send excessive coded data, or in other words, may not need to send excessive redundant packets, thereby reducing transmission overheads.

In the embodiment shown in FIG. 3, data is transmitted between the first device and the third device through an indirect connection path. It can be learned from FIG. 2B that there may alternatively be two transmission paths between the first device and the third device. In this case, in addition to the indirect connection path, the first device may further communicate with the third device through a direct connection path. Therefore, an embodiment of this application provides another communication method, to provide a data encoding and decoding solution in a plurality of transmission paths. FIG. 6 is a flowchart of the method.

S601: A first device sends first configuration information to a second device, and sends second configuration information to a third device; and correspondingly, the second device receives the first configuration information from the first device, and the third device receives the second configuration information from the first device. Alternatively, a third device sends second configuration information to a first device, and sends first configuration information to a second device; and correspondingly, the first device receives the second configuration information from the third device, and the second device receives the first configuration information from the third device.

For more content of S601, refer to S301 in the embodiment shown in FIG. 3.

S602: The first device obtains a first data packet. The first data packet belongs to a first data block.

For more content of S602, refer to S302 in the embodiment shown in FIG. 3.

S603: The first device sends first information to the second device. Correspondingly, the second device receives the first information from the first device.

In this embodiment of this application, an example in which the first data block includes k data packets is used. The first data packet is one of the k data packets, and in addition, the k data packets further include a second data packet. The first device performs network coding on the k data packets, to obtain k+m pieces of coded data. For example, a first part of coded data in the k+m pieces of coded data is transmitted through an indirect connection path, and the first device sends the first part of coded data to the second device, so that the second device sends the first part of coded data to the third device. The first coded data indicated by the first information is one piece of the first part of coded data. A second part of coded data in the k+m pieces of coded data is transmitted through a direct connection path, and the first device may send the second part of coded data to the third device through the Uu interface. For example, the first part of coded data and the second part of coded data are some or all of the k+m pieces of coded data.

After receiving the first information, the second device may recode the first coded data indicated by the first information, to obtain third coded data. For this, refer to S303 in the embodiment shown in FIG. 3. Alternatively, the second device may not recode the first coded data. For example, if a first coding coefficient set is configured in a semi-static manner, the second device needs to recode coded data from the first device within a period of time. Alternatively, if a first coding coefficient set is not configured in a semi-static manner, for example, is configured in a dynamic manner, the second device may determine whether to recode coded data from the first device. For example, the second device may determine, based on factors such as quality of a transmission path, whether to recode the coded data from the first device. If the quality of the transmission path is poor, the second device may recode the coded data from the first device; or if the quality of the transmission path is good, the second device may not recode the coded data from the first device.

Optionally, the method may further include S604 and S605. S604 includes: The first device obtains the second data packet, where the second data packet belongs to the first data block. S605 includes: The first device sends second information to the third device, and correspondingly, the third device receives the second information from the first device.

The first device may perform network coding on the second data packet based on a second coding coefficient to obtain second coded data. The second coding coefficient may belong to a second coding coefficient set, for example, is a vector other than the first coding coefficient in the second coding coefficient set.

For example, when the second coding coefficient is a row vector in the second coding coefficient set, a network coding process is as follows:

$$\begin{bmatrix} a_{1,1} & a_{1,2} & a_{1,3} \dots a_{1,k} \\ a_{2,1} & a_{2,2} & a_{2,3} \dots a_{2,k} \\ \dots \dots \\ a_{N,1} \; a_{N2} \; a_{N,3} \dots a_{N,k,} \end{bmatrix} \begin{bmatrix} x_1 \\ x_2 \\ \dots \\ x_k \end{bmatrix} = \begin{bmatrix} y_1 \\ y_2 \\ \dots \\ y_{N_1} \\ y_{N_1+1} \\ \dots \\ y_N \end{bmatrix} \qquad \text{(Formula 15)}$$

The second information may indicate the second coding coefficient, or may indicate the second coded data, where the second coded data is one piece of the second part of coded data. Implementations of the second information and the second coding coefficient are respectively similar to those of the first information and the first coding coefficient. Therefore, for more content of S604 and S605, refer to S602 and S603.

S606: The second device sends third information to the third device. Correspondingly, the third device receives the third information from the second device.

For more content of S606, refer to S304 in the embodiment shown in FIG. 3.

If the second device recodes the first coded data, perform S606; or if the second device does not recode the first coded data, S606 may be replaced with the following step: The second device sends the first information to the third device, and correspondingly, the third device receives the first information from the second device. That is, if the second device does not recode the first coded data, the second device may forward the first information to the third device.

S607: The third device decodes the third coded data based on the first coding coefficient and the third coding coefficient, to obtain the first data packet.

It can be learned from the foregoing descriptions that, coded data from the first device may be data that is not recoded, and coded data from the second device may be recoded or not recoded. Therefore, the third device cannot determine, based on a transmission path, whether received coded data is recoded, and the third device cannot determine a decoding manner to be used. In view of this, in this embodiment of this application, the packet header of the third coded data may include the third indication information. The third indication information may indicate whether the third coded data is data coded based on the first coding coefficient set, or indicate whether the third coded data is recoded data, or indicate whether the third coded data is the same as the first coded data. If the third coded data is the same as the first coded data, it may be considered that the third coded data is not recoded, or is data not coded based on the first coding coefficient set; or if the third coded data is different from the first coded data, it may be considered that the third coded data is recoded, or is data coded based on the first coding coefficient set.

For example, if the third indication information is a first value, it indicates that the third coded data is not data coded based on the first coding coefficient set, or indicates that the third coded data is not recoded data, or indicates that the third coded data is the same as the first coded data. There may be a special case. Although the third coded data is recoded data, the third coded data is the same as the first coded data. Therefore, even if the third indication information is not the first value, the third coded data may be the same as the first coded data. However, if the third indication information is not the first value, even if the third coded data is the same as the first coded data, it may be considered that the third coded data is recoded data. Therefore, if the third indication information is not the first value (for example, is a second value, where the second value may be any value other than the first value), it may indicate that the third coded data is data coded based on the first coding coefficient set, or indicate that the third coded data is recoded data.

For another example, if the packet header of the third coded data includes the third indication information, it indicates that the third coded data is data coded based on the first coding coefficient set, or indicates that the third coded data is recoded data, or indicates that the third coded data is different from the first coded data; or if the packet header of the third coded data does not include the third indication information, it indicates that the third coded data is data not coded based on the first coding coefficient set, or indicates that the third coded data is not recoded data, or indicates that the third coded data is the same as the first coded data.

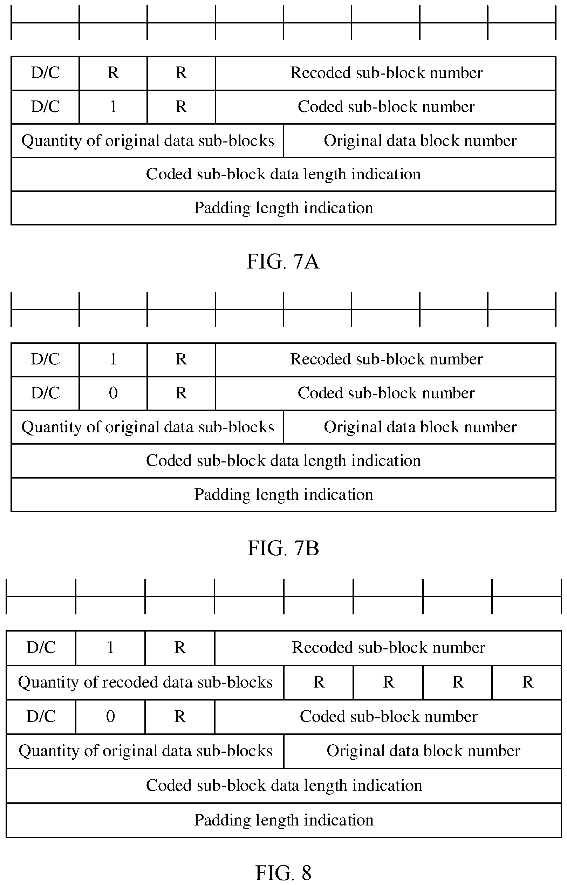

FIG. 7A is an optional implementation of the third indication information. An example in which indication is performed by using a value of the third indication information is used. For example, FIG. 7A shows a packet header of the third coded data, where a field represented by "1" may include the third indication information. "1" is a value, for example, a second value, of the third indication information. In other words, in FIG. 7A, an example in which the value of the third indication information is the second value is used. For example, a first value is "0". It can be seen that, a difference between FIG. 7A and FIG. 5 is that the third indication information is added, the third indication information is added to the packet header of the first coded data, and the packet header of the third coded data further includes the packet header of the first coded data. For example, the second device may add the third indication information to the packet header of the first coded data, and use the packet header to which the third indication information is added as the packet header of the third coded data. A manner in which the second device adds the third indication information to the packet header of the first coded data is that the second device modifies the packet header of the first coded data. For example, a field represented by "1" in FIG. 7A is originally a reserved field, and the second device modifies a value of the reserved field to the first value or the second value, so that the reserved field may include the third indication information. FIG. 7A is merely an example. If the second device needs to add the third indication information by modifying the packet header of the first coded data, the second device may alternatively modify another field of the packet header of the first coded data, that is, may add the third indication information to another field. For example, if the packet header of the first coded data is the same as the packet header of the third coded data (for example, the packet header of the third coded data includes first indication information but does not include second indication information), the implementation shown in FIG. 7A may be used for the third indication information.

FIG. 7B is another optional implementation of the third indication information. An example in which indication is performed by using whether the third indication information is included is used. For example, FIG. 7B shows a packet header of the third coded data, where a field represented by "1" in the first row may include the third indication information. The field is originally a reserved field. In this embodiment of this application, the field is used as a field including the third indication information. For example, a value of the field is changed to "1", indicating that the field includes the third indication information. For the third device, if the field includes the third indication information, it is determined that the third coded data is data coded based on the first coding coefficient set, or it is determined that the third coded data is recoded data, or it is determined that the third coded data is different from the first coded data; or if the field does not include the third indication information, it is determined that the third coded data is data not coded based on the first coding coefficient set, or it is determined that the third coded data is not recoded data, or it is determined that the third coded data is the same as the first coded data. In this manner, the second device does not need to modify the packet header of the first coded data, but adds a recoding packet header to the packet header of the first coded data, and the recoding packet header includes the third indication information. For the second device, this implementation is simpler. FIG. 7B is merely an example. If the second device needs to add the third indication information by using the recoding packet header, the second device may alternatively add the third indication information to another field of the recoding packet header. For example, if the packet header of the third coded data includes the packet header of the first coded data (for example, the packet header of the third coded data includes first indication information and second indication information), the implementation shown in FIG. 7A or the implementation shown in FIG. 7B may be used for the third indication information.

Optionally, in the manner shown in FIG. 7B, the packet header of the first coded data may further include fourth indication information, to indicate that the first coded data is not recoded data or is data not coded based on the first coding coefficient set. In this way, the third device can more clearly determine whether the received coded data is recoded. Still refer to FIG. 7B. "0" in the second row may represent the fourth indication information. The field is originally a reserved field, and is used in this embodiment of this application, to indicate that the field includes the fourth indication information. For the third device, if the packet header of the coded data received by the third device includes the fourth indication information, then if the packet header of the coded data does not include the third indication information, or a value of the third indication information is a first value, the third device may determine that the third coded data is data not coded based on the first coding coefficient set, or determine that the third coded data is not recoded data, or determine that the third coded data is the same as the first coded data. Alternatively, if the packet header of the coded data received by the third device includes the fourth indication information, and the packet header of the coded data includes the third indication information, or a value of the third indication information is a second value, the third device may determine that the third coded data is data coded based on the first coding coefficient set, or determine that the third coded data is recoded data, or determine that the third coded data is different from the first coded data.

If S604 and S605 are not performed, for more content of S607, refer to S305 in the embodiment shown in FIG. 3.

Alternatively, if S604 and S605 are performed, for example, the coded data that is recoded and the coded data that is not recoded correspond to a same data block, then optionally, the third device may uniformly decode the coded data that is recoded and the coded data that is not recoded. For example, S607 may be replaced with the following: The third device decodes the second coded data and the third coded data based on the first coding coefficient, the second coding coefficient, and the third coding coefficient, to obtain the first data packet and the second data packet.

After receiving the second information, the third device may obtain the second coded data indicated by the second information. For example, the third device may receive, by using a receiving part of a Uu interface of an SRAP entity of the third device, second information to which an SRAP packet header is added. In this case, the receiving part of the Uu interface of the SRAP entity may remove the SRAP packet header, and deliver, to a protocol layer having a network coding function, the second information with the SRAP packet header removed. For descriptions of the protocol layer, refer to the foregoing descriptions. In the following descriptions, functions performed by the protocol layer are uniformly described as being performed by the third device.

The second information may include a packet header of the second coded data, and the third device may determine the second coding coefficient based on the first indication information included in the packet header of the second coded data. For example, the third device may adjust an arrangement order of vectors in the second coding coefficient set based on the first indication information. For example, if the second coding coefficient is a row vector, the third device may adjust an arrangement order of row vectors in the second coding coefficient set based on the first indication information; or if the second coding coefficient is a column vector, the third device may adjust an arrangement order of column vectors in the second coding coefficient set based on the first indication information.

For example, the third device may divide the second coding coefficient set into a first subset and a second subset. The first subset includes a coding coefficient corresponding to the coded data that is recoded, and the second subset includes a coding coefficient corresponding to the coded data that is not recoded. For example, the third device may adjust an arrangement order of vectors in the first coding coefficient set based on the first indication information or the second indication information corresponding to the recoded data, to obtain a coding coefficient set A; and adjust an arrangement order of vectors in the first subset based on the first indication information corresponding to the recoded data, to obtain a coding coefficient set B. In addition, the third device may further adjust an arrangement order of vectors in the second subset based on the first indication information corresponding to the coded data that is not recoded, to obtain a coding coefficient set C. For example, the second information may include a packet header of the second coded data, and the third device may determine the second coding coefficient based on the first indication information included in the packet header of the second coded data, so as to adjust the arrangement order of the vectors in the second subset based on the first indication information corresponding to the second coding coefficient, to obtain the coding coefficient set C. For example, the third device may adjust an arrangement order of vectors in the second coding coefficient set based on the first indication information. For example, if the second coding coefficient is a row vector, the third device may adjust an arrangement order of row vectors in the second coding coefficient set based on the first indication information; or if the second coding coefficient is a column vector, the third device may adjust an arrangement order of column vectors in the second coding coefficient set based on the first indication information.

The third device may decode the second coded data and the third coded data based on the coding coefficient set A, the coding coefficient set B, and the coding coefficient set C, to obtain the first data packet and the second data packet. For example, the third device may obtain a coding coefficient set D based on the coding coefficient set A, the coding coefficient set B, and the coding coefficient set C, and decode the second coded data and the third coded data based on the coding coefficient set D, to obtain the first data packet and the second data packet.

Optionally, for example, the coding coefficient set A is as follows:

$$\begin{bmatrix} a_{1,1} & a_{1,2} & a_{1,3} \dots a_{1,k} \\ a_{4,1} & a_{4,2} & a_{4,3} \dots a_{4,k} \\ a_{3,1} & a_{3,2} & a_{3,3} \dots a_{3,k} \\ a_{2,1} & a_{2,2} & a_{2,3} \dots a_{2,k} \\ & \dots \dots \\ a_{k_1,1} & a_{k_1,2} & a_{k_1,3} \dots a_{k_1,k} \end{bmatrix} \qquad \text{(Formula 16)}$$

The coding coefficient set B is as follows:

$$\begin{bmatrix} b_{3,1} & b_{3,2} & b_{3,3} \dots b_{3,k_1} \\ b_{4,1} & b_{4,2} & b_{4,3} \dots b_{4,k_1} \\ b_{2,1} & b_{2,2} & b_{2,3} \dots b_{2,k_1} \\ b_{1,1} & b_{1,2} & b_{1,3} \dots b_{1,k_1} \\ & \dots \dots \\ b_{k_1,1} & b_{k_1,2} & b_{k_1,3} \dots b_{k_1,k_1} \end{bmatrix} \qquad \text{(Formula 17)}$$

The coding coefficient set C is as follows:

$$\begin{bmatrix} a_{(k_1+3),1} & a_{(k_1+3),2} & a_{(k_1+3),3} \cdots a_{(k_1+3),k} \\ a_{(k_1+5),1} & a_{(k_1+5),2} & a_{(k_1+5),3} \cdots a_{(k_1+5),k} \\ & \cdots\cdots & \\ a_{k,1} & a_{k,2} & a_{k,3} \cdots \quad a_{k,k} \end{bmatrix}$$ (Formula 18)

The third device obtains the coding coefficient set D based on the coding coefficient set A, the coding coefficient set B, and the coding coefficient set C. For example, in one manner, the third device combines the coding coefficient set A, the coding coefficient set B, and the coding coefficient set C to obtain the coding coefficient set D. For example, in a combination manner, the third device obtains a combined coding coefficient set based on the coding coefficient set A and the coding coefficient set B, and then adds the coding coefficient set C before vectors included in the combined coding coefficient set (for example, adds $k_1$ row vectors in the coding coefficient set C as the first $k_1$ row vectors of the combined coding coefficient set, where the original first row vector of the combined coding coefficient set changes to the $(k_1+1)^{th}$ row vector); or adds the coding coefficient set C after vectors included in the combined coding coefficient set (for example, adds $k_1$ row vectors in the coding coefficient set C as the last $k_1$ row vectors of the combined coding coefficient set, which is equivalent to extending $k_1$ row vectors for the combined coding coefficient set), to obtain the coding coefficient set D. For example, the coding coefficient set D is as follows:

$$\begin{bmatrix} d_{1,1} & d_{1,2} & d_{1,3} \ \dots & d_{1,k} \\ d_{2,1} & d_{2,2} & d_{2,3} \ \dots & d_{2,k} \\ d_{3,1} & d_{3,2} & d_{3,3} \ \dots & d_{3,k} \\ & \cdots\cdots & \\ d_{k_1,1} & d_{k_1,2} & d_{k_1,3} \ \dots & d_{k_1,k} \\ d_{(k_1+1),1} & d_{(k_1+1),2} & d_{(k_1+1),3} \cdots d_{(k_1+1),k} \\ d_{(k_1+2),1} & d_{(k_1+2),2} & d_{(k_1+2),3} \cdots d_{(k_1+2),k} \\ & \cdots\cdots & \\ d_{k,1} & d_{k,2} & d_{k,3} \cdots & d_{k,k} \end{bmatrix}$$ (Formula 19)

The first $k_1$ row vectors in the coding coefficient set D are, for example, the combined coding coefficient set. The combined coding coefficient set is, for example, a coding coefficient set Q (or referred to as a matrix Q). The matrix Q may be obtained based on the coding coefficient set A and the coding coefficient set B. For example, the matrix Q is a product of the coding coefficient set B and the coding coefficient set A, and the relationship may be represented as follows:

$$\begin{bmatrix} q_{1,1} & q_{1,2} & q_{1,3} & \cdots & q_{1,k} \\ q_{2,1} & q_{2,2} & q_{2,3} & \cdots & q_{2,k} \\ q_{3,1} & q_{3,2} & q_{3,3} & \cdots & q_{3,k} \\ q_{4,1} & q_{4,2} & q_{4,3} & \cdots & q_{4,k} \\ & \cdots\cdots & \\ q_{k_1,1} & q_{k_1,2} & q_{k_1,3} & \cdots & q_{k_1,k} \end{bmatrix} =$$

$$\begin{bmatrix} b_{3,1} & b_{3,2} & b_{3,3} \dots b_{3,k_1} \\ b_{4,1} & b_{4,2} & b_{4,3} \dots b_{4,k_1} \\ b_{2,1} & b_{2,2} & b_{2,3} \dots b_{2,k_1} \\ b_{1,1} & b_{1,2} & b_{1,3} \dots b_{1,k_1} \\ & \cdots\cdots & \\ b_{k_1,1} & b_{k_1,2} & b_{k_1,3} \dots b_{k_1,k_1} \end{bmatrix} \begin{bmatrix} a_{1,1} & a_{1,2} & a_{1,3} \dots a_{1,k} \\ a_{4,1} & a_{4,2} & a_{4,3} \dots a_{4,k} \\ a_{3,1} & a_{3,2} & a_{3,3} \dots a_{3,k} \\ a_{2,1} & a_{2,2} & a_{2,3} \dots a_{2,k} \\ & \cdots\cdots & \\ a_{k_1,1} & a_{k_1,2} & a_{k_1,3} \dots a_{k_1,k} \end{bmatrix}$$ (Formula 20)

It should be noted that an arrangement order of coding coefficients in the coding coefficient set D may be determined based on a receiving order of the recoded data and the coded data by the third device. Therefore, in the coding coefficient set D, the coding coefficient set A, the coding coefficient set B, and the coding coefficient set C are not necessarily presented as three entire sets, but coding coefficients from any one or more of the coding coefficient set A, the coding coefficient set B, and the coding coefficient set C may be distributed in a crossed manner. For example, the coding coefficient is a row vector in the coding coefficient set. For example, the first row in the coding coefficient set D is a row vector from the coding coefficient set Q, the second row in the coding coefficient set D may be a row vector from the coding system set C, and the third row in the coding coefficient set D may be a row vector from the coding coefficient set Q or a row vector from the coding system set C.

Formula 13 is used as an example. The third device decodes the second coded data and the third coded data based on the coding coefficient set D. For example, a decoding process is as follows:

$$
\begin{bmatrix} x_1 \\ x_2 \\ x_3 \\ x_4 \\ \dots \\ x_k \end{bmatrix} = \begin{bmatrix} d_{1,1} & d_{1,2} & d_{1,3} \dots & d_{1,k} \\ d_{2,1} & d_{2,2} & d_{2,3} \dots & d_{2,k} \\ d_{3,1} & d_{3,2} & d_{3,3} \dots & d_{3,k} \\ & \dots\dots & \\ d_{k_1,1} & d_{k_1,2} & d_{k_1,3} \dots & d_{k_1,k} \\ d_{(k_1+1),1} & d_{(k_1+1),2} & d_{(k_1+1),3} \dots d_{(k_1+1),k} \\ d_{(k_1+2),1} & d_{(k_1+2),2} & d_{(k_1+2),3} \dots d_{(k_1+2),k} \\ & \dots\dots & \\ d_{k,1} & d_{k,2} & d_{k,3} \dots & d_{k,k} \end{bmatrix} \begin{bmatrix} z_3 \\ z_4 \\ z_2 \\ z_1 \\ \dots \\ z_{N_2} \\ y_3 \\ y_4 \\ y_2 \\ y_1 \\ \dots \\ y_N \end{bmatrix} \qquad \text{(Formula 21)}
$$

According to Formula 21, the third device may obtain k pieces of decoded data in a joint decoding manner, and the k pieces of decoded data are, for example, k data packets. By using the joint decoding manner, lost data can be better restored, so that transmission reliability is improved and a retransmission delay is reduced.

Optionally, if the third device needs to obtain k pieces of decoded data, the coding coefficient set D needs to include at least k coding coefficients. For example, k=k1+k2, where k1 is a quantity of pieces of recoded data, and k2 is a quantity of pieces of uncoded data. For example, the k1 pieces of recoded data are some or all of the recoded data received by the third device, and the k2 pieces of coded data are some or all of uncoded sub-blocks received by the third device. Based on any two of k, k1, or k2, the third device can determine the other value.

Optionally, k1 may be indicated in an implicit manner, for example, may be obtained by using the first configuration information and the second configuration information. For example, the second device and the third device may determine k1 based on the recoding coefficient set, in other words, a quantity of rows or columns of the first coding coefficient set. For example, k1 is determined based on a quantity of columns of the first coding coefficient set provided in Formula 5, or k1 is determined based on a quantity of rows of the first coding coefficient set provided in Formula 6, and finally, the decoding matrix shown in Formula 17 is determined based on the first indication information or the second indication information.

Alternatively, k1 may be indicated in an explicit manner. For example, the packet header of the third coded data may include fifth indication information, where the fifth indication information may indicate a quantity of pieces of recoded data, or indicate a quantity of pieces of data coded by using the first coding coefficient set, or indicate a quantity of pieces of data coded by using the first coding coefficient set and the second coding coefficient set. The third device may determine the quantity of pieces of recoded data based on the packet header of the third coded data. A manner in which the packet header of the third coded data includes the fifth indication information is as follows: The third device may modify the packet header of the first coded data, so that a modified packet header of the first coded data includes the fifth indication information, and the modified packet header of the first coded data may be used as the packet header of the third coded data.

For example, a modification manner in which the third device modifies the packet header of the first coded data is as follows: The third device adds a field to the packet header of the first coded data, to use the field to carry the fifth indication information. FIG. 8 is an optional implementation of the fifth indication information. FIG. 8 is, for example, the packet header of the third coded data, where the second row may include a quantity of recoded data sub-blocks, or a quantity of pieces of recoded data, to explicitly indicate a value of k1. The second row is the field added by the third device to the packet header of the first coded data. Optionally, in addition to the field including the quantity of pieces of recoded data, the third device may further add another field, for example, an "R" field shown in the second row in FIG. 8. For other content of FIG. 8, refer to the descriptions of FIG. 7B.

Alternatively, the third device may modify an original field in the packet header of the first coded data, so that a modified original field may include the fifth indication information. This is not limited.

In addition, because k2=k-k1, k2 may not need to be explicitly indicated.

In embodiments of this application, the second device may recode received coded data based on the first coding coefficient set, and the second device is, for example, a relay device. For example, the second device receives the coded data from the first device, where the data is obtained through a coding process, and the coded data is to be sent to the third device. In this case, the second device may recode the coded data by using the first coding coefficient set, and then send recoded data to the third device. The second device does not need to decode the first coded data, but may directly recode the first coded data, thereby reducing decoding time of the second device and reducing a transmission delay. Reliability of data transmission is also improved through the recoding process of the second device. In a manner of generating redundant packets in the recoding process of the second device, the first device may not need to send excessive coded data, or in other words, may not need to send excessive redundant packets, thereby reducing transmission overheads. In this embodiment of this application, transmission between the first device and the third device may be implemented through a plurality of paths, thereby improving a throughput rate. In addition, the coded data received by the third device may be recoded, or may not be recoded, which is flexible. In addition, the packet header of the coded data may be used to indicate whether the coded data is recoded, which helps improve accuracy of the decoding process.

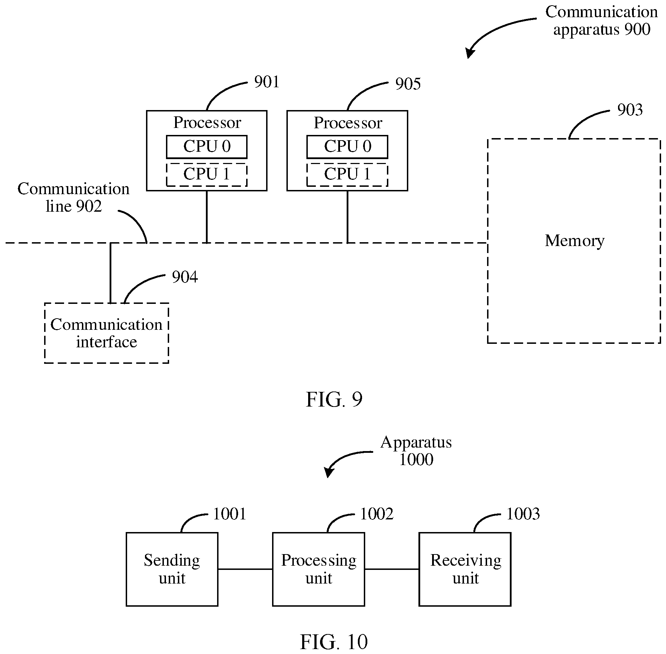

FIG. 9 is a diagram of a structure of a communication apparatus according to an embodiment of this application. The communication apparatus 900 may be the first device or a circuit system of the first device in the embodiment shown in FIG. 3 or FIG. 6, and is configured to implement the method corresponding to the first device in the foregoing method embodiments. Alternatively, the communication apparatus 900 may be the second device or a circuit system of the second device in the embodiment shown in FIG. 3 or FIG. 6, and is configured to implement the method corresponding to the second device in the foregoing method embodiments. Alternatively, the communication apparatus 900 may be the third device or a circuit system of the third device in the embodiment shown in FIG. 3 or FIG. 6, and is configured to implement the method corresponding to the third device in the foregoing method embodiments. For specific functions, refer to descriptions of the foregoing method embodiments. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver, a transceiver circuit, an input/output interface, or the like, and is configured to implement a transceiver function of the communication apparatus 900 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits for controlling program execution for the solutions of this application.

The communication line 902 may include a path through which information is transmitted between the foregoing components.

The communication interface 904 may be any transceiver-type apparatus, and is configured to communicate with another device or a communication network, such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, the memory 903 is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions of this application, and the processor 901 controls execution. The processor 901 is configured to execute the computer-executable instruction stored in the memory 903, to implement the steps performed by the first device in the embodiment according to FIG. 3 or FIG. 6, or implement the steps performed by the second device in the embodiment according to FIG. 3 or FIG. 6, or implement the steps performed by the third device in the embodiment according to FIG. 3 or FIG. 6.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first device, a chip of the second device, or a chip of the third device, the chip includes a processor 901 (may further include a processor 905), a communication line 902, a memory 903, and a communication interface 904. Specifically, the communication interface 904 may be an input interface, a pin, a circuit, or the like. The memory 903 may be a register, a cache, or the like. The processor 901 and the processor 905 may each be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when division into functional modules is performed based on corresponding functions, FIG. 10 is a diagram of an apparatus. The apparatus 1000 may be the first device, the second device, or the third device in the foregoing method embodiments, or a chip in the first device, a chip in the second device, or a chip in the third device. The apparatus 1000 includes a sending unit 1001, a processing unit 1002, and a receiving unit 1003.

It should be understood that the apparatus 1000 may be configured to implement the steps performed by the first device, the second device, or the third device in the communication method in embodiments of this application. For related features, refer to the embodiment shown in FIG. 3 or FIG. 6 above. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may be further implemented by using a pin, a circuit, or the like.

This application further provides a computer-readable storage medium. The computer-readable storage medium stores a computer program or instructions. When the computer program or the instructions are run, the method performed by the first device, the second device, or the third device in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first device, the second device, or the third device in any one of the foregoing method embodiments.

An embodiment of this application further provides a processing apparatus, including a processor and an interface. The processor is configured to perform the method performed by the first device, the second device, or the third device in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field programmable gate array (field programmable gate array, FPGA), or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor can read information from the storage medium, and can write information to the storage medium. Optionally, the storage medium may alternatively be integrated into a processor. The processor and the storage medium may be disposed in an ASIC, and the ASIC may be disposed in a terminal device. Optionally, the processor and the storage medium may alternatively be disposed in different components in the terminal device.

These computer program instructions may alternatively be loaded onto a computer or another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that, in embodiments of this application, the first device and/or the second device and/or the third device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

**Claims**

1. A communication method, applied to a first device, wherein the method comprises:

   sending first configuration information to a second device and sending second configuration information to a third device, or receiving second configuration information from a third device, wherein the first configuration information indicates a first coding coefficient set, and the second configuration information indicates the first coding coefficient set and a second coding coefficient set;
   obtaining a first data packet, wherein the first data packet belongs to a first data block; and

sending first information to the second device, wherein the first information indicates first coded data, the first information further comprises first indication information, the first indication information indicates a first coding coefficient, the first coded data is generated based on the first coding coefficient and the first data packet, the first coding coefficient belongs to the second coding coefficient set, and the second coding coefficient set is for coding the first coded data.

2. The method according to claim 1, wherein the method further comprises:

obtaining a second data packet, wherein the second data packet belongs to the first data block; and
sending second information to the third device, wherein the second information indicates second coded data, the second coded data is generated based on a second coding coefficient and the second data packet, and the second coding coefficient belongs to the second coding coefficient set.

3. The method according to claim 2, wherein

the first coding coefficient set is a first coding coefficient matrix; or
the second coding coefficient set is a second coding coefficient matrix, the first coding coefficient is a vector in the second coding coefficient matrix, and the second coding coefficient is another vector in the second coding coefficient matrix.

4. The method according to any one of claims 1 to 3, wherein the first information comprises a packet header of the first coded data, and the packet header of the first coded data comprises the first indication information.

5. The method according to claim 4, wherein the packet header of the first coded data further indicates one or more of the following: a length of the first coded data, a quantity of data packets comprised in the first data block, a sequence number of the first data packet in the data packets comprised in the first data block, or padding bit information.

6. The method according to any one of claims 1 to 5, wherein the first coding coefficient set and the second coding coefficient set are from a same finite field.

7. A communication method, applied to a second device, wherein the method comprises:

receiving first information from a first device, wherein the first information indicates first coded data, the first information further comprises first indication information, the first indication information indicates a first coding coefficient, and the first coding coefficient is for generating the first coded data; and
sending third information to a third device, wherein the third information indicates third coded data, the third coded data is generated based on a third coding coefficient and the first coded data, and the third information further indicates the first coding coefficient and the third coding coefficient.

8. The method according to claim 7, wherein

the first coding coefficient belongs to a second coding coefficient set; and
the third coding coefficient belongs to a first coding coefficient set.

9. The method according to claim 7 or 8, wherein that the third information indicates the first coding coefficient and the third coding coefficient comprises:

the third information comprises the first indication information, and the first indication information further indicates the third coding coefficient; or
the third information comprises the first indication information and second indication information, and the second indication information indicates the third coding coefficient.

10. The method according to any one of claims 7 to 9, wherein the method further comprises:
receiving first configuration information, wherein the first configuration information indicates the first coding coefficient set.

11. The method according to any one of claims 7 to 10, wherein a size of the third coded data is the same as a size of the first coded data.

12. The method according to any one of claims 7 to 11, wherein the third information comprises a packet header of the third coded data, and the packet header of the third coded data comprises a packet header of the first coded data.

13. The method according to claim 12, wherein the packet header of the third coded data comprises the second indication information, and the second indication information indicates the third coding coefficient.

14. The method according to claim 12 or 13, wherein the first information comprises the packet header of the first coded data, and the packet header of the first coded data comprises the first indication information.

15. The method according to claim 14, wherein the packet header of the first coded data further indicates one or more of the following: a length of the first coded data, a quantity of data packets comprised in a first data block, a sequence number of a first data packet in the data packets comprised in the first data block, or padding bit information, wherein the first data packet is for generating the first coded data, and the first data packet belongs to the first data block.

16. The method according to any one of claims 12 to 15, wherein
the packet header of the third coded data comprises third indication information, to indicate whether the third coded data is data coded based on the first coding coefficient set.

17. The method according to claim 16, wherein when the third indication information is a first value, it indicates that the third coded data is the same as the first coded data.

18. The method according to any one of claims 7 to 17, wherein the first coding coefficient set and the second coding coefficient set are both from a same finite field.

19. A communication method, applied to a third device, wherein the method comprises:

receiving third information from a second device, wherein the third information indicates third coded data, the third coded data is generated based on a third coding coefficient and first coded data, the first coded data is generated based on a first coding coefficient and a first data packet, and the third information indicates the first coding coefficient and the third coding coefficient; and
decoding the third coded data based on the first coding coefficient and the third coding coefficient, to obtain the first data packet.

20. The method according to claim 19, wherein

the first coding coefficient belongs to a second coding coefficient set; and
the third coding coefficient belongs to a first coding coefficient set.

21. The method according to claim 19 or 20, wherein that the third information indicates the first coding coefficient and the third coding coefficient comprises:

the third information comprises first indication information, and the first indication information indicates the first coding coefficient and the third coding coefficient; or
the third information comprises first indication information and second indication information, the first indication information indicates the first coding coefficient, and the second indication information indicates the third coding coefficient.

22. The method according to any one of claims 19 to 21, wherein the method further comprises:

receiving second configuration information from a first device, wherein the second configuration information indicates the first coding coefficient set and the second coding coefficient set; or
sending first configuration information to the second device, wherein the first configuration information indicates the first coding coefficient set, and sending second configuration information to a first device, wherein the second configuration information indicates the first coding coefficient set and the second coding coefficient set.

23. The method according to any one of claims 19 to 22, wherein a size of the third coded data is the same as a size of the first coded data.

24. The method according to any one of claims 19 to 23, wherein the third information further comprises third indication information, to indicate whether the third coded data is data coded based on the first coding coefficient set.

25. The method according to claim 24, wherein when the third indication information is a first value, it indicates that the third coded data is the same as the first coded data.

26. The method according to any one of claims 19 to 25, wherein the third information further indicates one or more of the following: a length of the first coded data, a quantity of data packets comprised in a first data block, a sequence number of the first data packet in the data packets comprised in the first data block, or padding bit information, wherein the first data packet belongs to the first data block.

27. The method according to any one of claims 19 to 26, wherein the method further comprises:

receiving second information from the first device, wherein the second information indicates second coded data, and the second coded data is generated based on a second coding coefficient and a second data packet; and decoding the second coded data based on the first coding coefficient, to obtain the second data packet.

28. The method according to any one of claims 19 to 27, wherein the first coding coefficient set and the second coding coefficient set are both from a same finite field.

29. A communication apparatus, comprising a processor and a memory, wherein the memory is coupled to the processor, and the processor is configured to perform the method according to any one of claims 1 to 6, or configured to perform the method according to any one of claims 7 to 18, or configured to perform the method according to any one of claims 19 to 28.

30. A computer-readable storage medium, wherein the computer-readable storage medium is configured to store a computer program, and when the computer program is run on a computer, the computer is enabled to perform the method according to any one of claims 1 to 6, the method according to any one of claims 7 to 18, or the method according to any one of claims 19 to 28.

31. A chip system, wherein the chip system comprises:
a processor and an interface, wherein the processor is configured to invoke instructions from the interface and run the instructions, and when the processor executes the instructions, the method according to any one of claims 1 to 6, the method according to any one of claims 7 to 18, or the method according to any one of claims 19 to 28 is implemented.

32. A computer program product, wherein the computer program product comprises a computer program, and when the computer program is run on a computer, the computer is enabled to perform the method according to any one of claims 1 to 6, the method according to any one of claims 7 to 18, or the method according to any one of claims 19 to 28.

Network coding block

K network
coding packets

Network coding
redundant packets

Air interface
transmission

Decoding

FIG. 1

| PDCP | PDCP |
|------|------|
| SRAP | SRAP |
| RLC | RLC |
| MAC | MAC |
| PHY | PHY |

Transmitting part

Receiving part

Access network device

Relay device

Remote device

Uu receiving part / PC5 transmitting part

| SRAP | SRAP |
|------|------|
| RLC | RLC |
| MAC | MAC |
| PHY | PHY |

Transmitting part

| PDCP | PDCP |
|------|------|
| SRAP | SRAP |
| RLC | RLC |
| MAC | MAC |
| PHY | PHY |

Receiving part

FIG. 2A

| PDCP | |
| --- | --- |
| NC | |
| SRAP | RLC |
| RLC | |
| MAC | MAC |
| PHY | PHY |

Uu transmitting part

Direct connection path

Access network device

Relay device ⟷ Remote device

| NC | NC |
| --- | --- |
| SRAP | SRAP |
| RLC | RLC |
| MAC | MAC |
| PHY | PHY |

Uu receiving part

PC5 transmitting part

PC5 receiving part

| PDCP | |
| --- | --- |
| NC | |
| SRAP | RLC |
| RLC | |
| MAC | MAC |
| PHY | PHY |

Direct connection path

FIG. 2B

```
┌──────────┐                    ┌──────────┐                    ┌──────────┐
│  First   │                    │  Second  │                    │  Third   │
│  device  │                    │  device  │                    │  device  │
└──────────┘                    └──────────┘                    └──────────┘
     │    S301: First configuration   │                              │
     │          information           │                              │
     │───────────────────────────────▶│    S301: Second              │
     │                                │ configuration information    │
     │                                │─────────────────────────────▶│
┌──────────────────┐                  │                              │
│ S302: Obtain a   │                  │                              │
│ first data packet│                  │                              │
└──────────────────┘                  │                              │
     │ S303: First information (indicating                           │
     │ first coded data obtained based on                            │
     │ a first coding coefficient and the    S304: Third information │
     │       first data packet)          (indicating third coded data│
     │                                │  obtained based on a third    │
     │                                │   coding coefficient and the  │
     │───────────────────────────────▶│      first coded data)        │
     │                                │─────────────────────────────▶│
     │                                │                 ┌─────────────────┐
     │                                │                 │ S305: Decode    │
     │                                │                 │ the third coded │
     │                                │                 │ data based on the│
     │                                │                 │ first coding    │
     │                                │                 │ coefficient and │
     │                                │                 │ the third coding│
     │                                │                 │ coefficient     │
     │                                │                 └─────────────────┘
     │                                │                              │
```

FIG. 3

| D/C | R | R | Coded sub-block number |
|-----|---|---|------------------------|
| Quantity of original data sub-blocks | | Original data block number | |
| Coded sub-block data length indication | | | |
| Padding length indication | | | |

FIG. 4

| D/C | R | R | Recoded sub-block number | | |
|-----|---|---|--------------------------|---|---|
| D/C | R | R | Coded sub-block number | | |
| Quantity of original data sub-blocks | | | Original data block number | | |
| Coded sub-block data length indication | | | | | |
| Padding length indication | | | | | |

## FIG. 5

FIG. 6

EP 4 539 369 A1

| D/C | R | R | Recoded sub-block number |
| D/C | 1 | R | Coded sub-block number |
| Quantity of original data sub-blocks | | Original data block number | |
| Coded sub-block data length indication | | | |
| Padding length indication | | | |

FIG. 7A

| D/C | 1 | R | Recoded sub-block number |
| D/C | 0 | R | Coded sub-block number |
| Quantity of original data sub-blocks | | Original data block number | |
| Coded sub-block data length indication | | | |
| Padding length indication | | | |

FIG. 7B

| D/C | 1 | R | Recoded sub-block number | | | |
| Quantity of recoded data sub-blocks | | R | R | R | R |
| D/C | 0 | R | Coded sub-block number | | | |
| Quantity of original data sub-blocks | | Original data block number | | | |
| Coded sub-block data length indication | | | | | | |
| Padding length indication | | | | | | |

FIG. 8

FIG. 9

FIG. 10

## INTERNATIONAL SEARCH REPORT

| | International application No. |
|---|---|
| | **PCT/CN2023/099839** |

### A. CLASSIFICATION OF SUBJECT MATTER

H04L1/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; ENTXTC; WPABSC; VEN; ENTXT; CNKI; IEEE; 3GPP: 网络编码, 随机线性, 确定性, 编码系数, 二次, 编码, 中继, 配置, 指示, IAB, Network Coding, RLNC, deterministic, coefficient, secondary, relay, config+, indicat+

### C. DOCUMENTS CONSIDERED TO BE RELEVANT

| Category* | Citation of document, with indication, where appropriate, of the relevant passages | Relevant to claim No. |
|---|---|---|
| X | WO 2021160140 A1 (HUAWEI TECHNOLOGIES CO., LTD.) 19 August 2021 (2021-08-19) description, page 1, line 5 to page 39, line 18 | 7, 9, 11-15, 19, 21, 23, 26, 27, 29-32 |
| A | WO 2021160140 A1 (HUAWEI TECHNOLOGIES CO., LTD.) 19 August 2021 (2021-08-19) description, page 1, line 5 to page 39, line 18 | 1-6, 8, 10, 16-18, 20, 22, 24, 25, 28 |
| A | WO 2017219216 A1 (HUAWEI TECHNOLOGIES CO., LTD.) 28 December 2017 (2017-12-28) entire document | 1-32 |
| A | CN 101090304 A (BEIHANG UNIVERSITY) 19 December 2007 (2007-12-19) entire document | 1-32 |
| A | CN 101667885 A (TIANJIN UNIVERSITY) 10 March 2010 (2010-03-10) entire document | 1-32 |
| A | CN 113328826 A (HUAWEI TECHNOLOGIES CO., LTD.) 31 August 2021 (2021-08-31) entire document | 1-32 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2023** | **29 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099839**

| Patent document cited in search report | | | Publication date (day/month/year) | Patent family member(s) | | | Publication date (day/month/year) |
|---|---|---|---|---|---|---|---|
| WO | 2021160140 | A1 | 19 August 2021 | None | | | |
| WO | 2017219216 | A1 | 28 December 2017 | None | | | |
| CN | 101090304 | A | 19 December 2007 | CN | 100477576 | C | 08 April 2009 |
| CN | 101667885 | A | 10 March 2010 | None | | | |
| CN | 113328826 | A | 31 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210705960

- CN 202210956555